# EUROPÄISCHE PATENTSCHRIFT

(11) **EP 0 402 320 B1**
(45) Veröffentlichungstag und Bekanntmachung des Hinweises auf die Patenterteilung: **11.08.1993**
(21) Anmeldenummer: 90810409.4
(22) Anmeldetag: 05.06.1990
(51) Int. Cl.: G01G 3/16, G01L 1/10

(54) **Kraft-Messwandler und Herstellungsverfahren für einen solchen**
Transducer for measuring forces and manufacturing method for such a transducer
Transducteur pour mesurer des forces et méthode de fabrication de ce transducteur

(30) Priorität: 08.06.1989 CH 2152/89
(43) Veröffentlichungstag der Anmeldung: 12.12.1990
(73) Patentinhaber: K-TRON TECHNOLOGIES, INC., Wilmington, DE 19801 (US)
(72) Erfinder: Saner, Kaspar, CH-8600 Dübendorf (CH)
(74) Vertreter: Eder, Carl E.

(56) Entgegenhaltungen:
- EP-A- 0 126 185
- EP-A- 0 318 152
- GB-A- 2 142 430
- GB-A- 2 190 748
- SU-A- 609 983
- PATENT ABSTRACTS OF JAPAN, Band 11, Nr. 19 (P-537)(2466) 20. Januar 1987; & JP-A-61 194 325 (SHINKO DENSHI K.K.) 28. August 1986
- SOVIET INVENTIONS ILLUSTRATED, Woche 8605, 15. Februar 1986, Nr. 86-034366/05, Derwent Publications Ltd, London, GB; & SU-A-1167452 (BARZHIN V YA) 15. Juli 1985

## Beschreibung

Die Erfindung betrifft einen Kraft-Messwandler gemäss dem Oberbegriff des Anspruchs 1.

Ein solcher Kraft-Messwandler kann zum Beispiel zum Umwandeln und Messen einer Kraft verwendet werden, die vom Lastträger einer Waage, insbesondere demjenigen einer Dosiereinrichtung, auf den Kraftaufnehmer des Kraft-Messwandlers übertragen wird. Die Dosiereinrichtung kann beispielsweise ein zum Fördern des zu dosierenden Gutes dienendes Förderband und eine Bandwaage mit einem Lastträger aufweisen, über den das Förderband gleitet. Der Kraft-Messwandler kann jedoch auch für eine sogenannte gravimetrische Dosiereinrichtung verwendet werden, bei welcher das zu dosierende Gut mit einer Förderschnecke oder einem anderen Förderorgan von einem Gutspeicher weg- und/oder herausgefördert und mit einer Waage die Gewichtsabnahme des Gutspeichers ermittelt wird.

Aus der JP-A-Sho-61-194 325 und der EP-A-0 318 152 bekannte Kraft-Messwandler weisen eine Kraft-Übertragungsvorrichtung und ein mit dieser verbundenes, längliches Wandelelement auf. Der Kraft-Messwandler weist einen rhombus- oder ellipsenförmigen Rahmen auf, der bei zwei einander gegenüberstehenden Rhombusecken bzw. Ellipsenscheiteln ein an einem Gestell oder dergleichen befestigtes Referenzorgan und einen bewegbaren, zum Aufnehmen der zu messenden Kraft dienenden Kraftaufnehmer hat. Bei den beiden andern Rhombusecken bzw. Ellipsenscheiteln sind Halterungen vorhanden, die das Wandelelement am Rahmen halten. Die Halterungen sind durch die von den Rahmenschenkeln gebildeten Übertragungsglieder geringfügig bewegbar mit dem Referenzorgan und dem Kraftaufnehmer verbunden. Bei dem rhombusförmigen Rahmen sind bei den Enden der Übertragungsglieder zudem noch Einschnürungen vorhanden, die je ein Biegegelenk bilden. Das Wandelelement besteht bei den meisten Ausführungsvarianten aus einem doppelstimmgabelartigen Schwinger mit zwei Zinken, die beidenends durch einen Steg miteinander verbunden sind. Der Rahmen, die Halterungen sowie der Schwinger bestehen aus Abschnitten eines einstückigen Plättchens. Bei den aus der JP-A-61-Sho-194 325 bekannten Kraft-Messwandlern besteht das Plättchen aus Metall und ist bei seinem zum Schwinger gehörenden Teil mit zwei piezoelektrischen Elementen und Elektroden versehen. Beim Kraft-Messwandler gemäss der EP-A-0 318 152 besteht das Plättchen aus Quarz und ist im Bereich der Zinken des Schwingers mit Elektroden versehen. Die Elektroden sind über elektrische Leiter mit einer Elektronik-Vorrichtung verbunden.

Bei der Benutzung dieser bekannten Kraft-Messwandlers wird beim Kraftaufnehmen eine Druckkraft in den Kraftaufnehmer eingeleitet. Diese Druckkraft drückt den Kraftaufnehmer gegen das Referenzorgan, wodurch die Halterungen von einander weggedrückt werden, so dass diese ihrerseits eine Zugkraft auf das Wandelelement ausüben. Die beim Referenzorgan und Kraftaufnehmer auf den Rahmen einwirkende Druckkraft neigt jedoch zur Erzeugung von Biegungen und/oder Torsionen, bei denen gewisse Bereiche des Rahmens in undefinierter Weise aus der von diesem im Ruhezustand aufgespannter Ebene heraus gebogen werden und/oder sogar ausknicken, wodurch die Messungen verfälscht werden und unter Umständen sogar bleibende Beschädigungen entstehen.

Die in der JP-A-Sho-61-194 325 beschriebenen Plättchen sind - vermutlich zur Vermeidung von unerwünschten Biegungen und Torsionen der genannten Art - verhältnismässig, nämlich mehrere Millimeter dick. Der doppelstimmgabelartige Schwinger und die übrigen beweglichen Teile haben daher - im Verhältnis zur Länge der schwingfähigen Zinken des Schwingers - verhältnis mässig grosse Massen. Bewegliche Teile mit grossen Massen sind jedoch nachteilig, weil sie beim Messen sehr empfindlich auf von aussen einwirkende Erschütterungen und Schläge sind. Wenn ein Kraft-Messwandler mit schweren, beweglichen Teilen zum Beispiel beim Transport oder bei gewissen Arbeiten an einer den Kraft-Messwandler aufweisenden Einrichtung extrem starken Erschütterungen und Schlageinwirkungen ausgesetzt ist, kann er unter Umständen sogar beschädigt werden. Ferner ist es bei dicken Plättchen schwierig, schmale stegförmige Abschnitte herzustellen, wie sie beispielsweise für die Biegegelenke der Kraft-Übertragungsvorrichtung und für die Zinken des Schwingers wünschenswert sind. Gemäss der japanischen Publikation werden die Kraft-Übertragungsvorrichtungen sowie die Schwinger mit einem Draht durch Funkenerosion aus einem vollen metallischen Plättchen herausgeschnitten. Ein derartiges Zuschneiden eines mehrere Millimeter dicken Plättchens ist jedoch sehr zeitraubend und aufwendig.

Gemäss den Figuren 6 und 8 der EP-A-0 318 152 beträgt die parallel zur Schwinger-Längsrichtung gemessene Maximal-Abmessung der in diesen Figuren gezeichneten Plättchen ungefähr 10 mm bzw. 12 mm und die Dicke der Plättchen ungefähr 0,15 mm bzw. 0,25 mm. Es scheint sehr zweifelhaft, ob bei derart bemessenen Plättchen unerwünschte Biegungen und Torsionen verhindert werden können, bei denen Abschnitte der Plättchen aus den von diesen im Ruhezustand aufgespannten Ebenen heraus gelangen. Im übrigen ist es kompliziert und teuer, eine Kraft-Übertragungsvorrichtung und einen Schwinger mit den gezeichneten Formen aus einem kompakten Quarzkristall herauszuschneiden.

Die bei den Vorrichtungen gemäss der JP-A-Sho-61-194 325 und der EP-A-0 318 152 an den Schwingern angebrachten piezoelektrischen Elemente und/oder Elektroden und die elektrischen Leiter, welche mit einer Elektronik-Vorrichtung verbunden sind, können ferner die Schwingungen des Schwingers stören und dadurch die Messgenauigkeit verkleinern. Zudem sind die Schwinger bei diesen bekannten Messwandlern wahrscheinlich schwingungsmässig stark mit der Kraft-Übertragungsvorrichtung gekoppelt, wodurch die Schwingungen des Schwingers beim Messen stark gedämpft werden und die Messgenauigkeit reduziert wird.

Ein aus der EP-A-0 126 185 bekannter Kraft-Messwandler hat eine beim Messen feststehende, als Referenzorgan dienende Konsole, an der ein zweiarmiger Hebel schwenkbar gelagert ist, der zum Aufnehmen sowie Übertragen der zu messenden Kraft und also als Kraftaufnehmer und Kraft-Übertragungsvorrichtung dient. Ein Wandelelement besteht aus einer metallischen, elektrisch leitenden Saite, die beim einen Ende über eine Halterung mit der Konsole und beim andern Ende über eine Halterung mit dem Hebel verbunden ist. Jede Halterung weist eine Klemmschraube und ein mit dieser an der Konsole bzw. am Hebel befestigtes Klemmstück auf. An der Konsole ist ferner ein Magnet befestigt, der im mittleren Bereich der Saite ein Magnetfeld erzeugt. Die Saitenenden sind über die Halterungen hinaus verlängert und mit einer Elektronik-Vorrichtung verbunden, die beim Messen einen Strom durch die Saite hindurch leitet. Da die Konsole und der Hebel vermutlich aus Metall bestehen, sind die Halterungen wahrscheinlich noch mit Isoliermitteln versehen, um die Saitenenden elektrisch gegen die Konsole und gegen den Hebel zu isolieren. Der aus der EP-A-0 126 185 bekannte Kraft-Messwandler hat den Nachteil, dass er verhältnismässig viele separate und verschieden ausgebildete Teile aufweist. Die Herstellung und Montage eines derartigen Kraft-Messwandlers ist daher aufwendig. Bei dem aus der EP-A-0 126 185 bekannten Kraft-Messwandler sind ferner die zum Halten der Saite dienenden Halterungen nur auf einer Seite an der Konsole bzw. am Ende des einen Arms des Hebels befestigt. Da der Hebel eine Kraft auf die Saite übertragen muss und da diese die Saite unter Zugspannung steht, müssen die Konsole, der Hebel und die Halterungen relative grosse Biegemomente aufnehmen. Die Konsole, der Hebel und die Halterungen müssen daher eine grosse Festigkeit aufweisen und - im Vergleich zur Saitenlänge - relativ gross bemessen werden, so dass der Platzbedarf des Kraft-Messwandlers gross wird. Zudem haben der Hebel und die an diesem befestigte Halterung dann auch grosse Massen. Bewegbare Teile mit grossen Massen sind jedoch aus den schon in bezug auf die Vorrichtung gemäss der JP-A-Sho-61-194 325 erläuterten Gründen unerwünscht.

Der Erfindung liegt daher die Aufgabe zugrunde, einen Kraft-Messwandler zu schaffen, der die Nachteile der bekannten Kraft-Messwandler vermeidet. Dabei wird ausgehend von dem aus der JP-A-Sho-61-194 325 bekannten Kraft-Messwandler insbesondere angestrebt, das Gewicht der beweglichen Teile der Kraft-Übertragungsvorrichtung im Vergleich zur Maximalabmessung des Wandelelements möglichst klein zu machen und trotzdem einen ausreichenden Widerstand gegen Biegungen, Torsionen sowie Ausknickungen zu erzielen, bei denen Teile der Kraft-Übertragungsvorrichtung in unerwünschten Richtungen deformiert werden. Ferner soll der Kraft-Messwandler ermöglichen, ein elektrisch leitendes Wandelelement bei den Halterungen elektrisch isoliert zu halten. Des weitern soll ermöglicht werden, ein Wandelelement mit einer beim Messen schwingenden Saite vorzusehen und auch zur Erzeugung eines die Saite kreuzenden Magnetfeldes dienende Magnete in einfacher Weise zu halten. Der Kraft-Messwandler und insbesondere dessen Kraft-Übertragungsvorrichtung soll ferner kostengünstig herstellbar sein.

Diese Aufgabe wird durch einen Kraft-Messwandler gelöst, der erfindungsgemäss die Merkmale des Anspruchs 1 aufweist. Vorteilhafte Ausgestaltungen des Kraft-Messwandlers gehen aus den von Anspruch 1 abhängigen Ansprüchen hervor.

Die Erfindung hat ferner ein Herstellungsverfahren für einen solchen Kraft-Messwandler zum Gegenstand. Dieses Verfahren hat gemäss der Erfindung die Merkmale des Anspruchs 10.

Das Wandelelement weist vorzugsweise einen von der Kraft-Übertragungsvorrichtung gehaltenen, länglichen Hauptabschnitt, nämlich eine Saite auf, die beim Messen in mindestens einem sie kreuzenden Magnetfeld mit einer Resonanzfrequenz, zum Beispiel mit der zweiten Eigenschwingungsfrequenz schwingt. Diese Frequenz ist proportional zur Quadratwurzel der die Saite spannenden Kraft. Diese setzt sich aus einer durch Vorspannung erzeugten, konstanten Kraft und einer veränderlichen Kraft zusammen, die proportional zur beim Kraftaufnehmer der Kraft-Übertragungsvorrichtung eingeleiteten Kraft ist. Eine elektrisch leitend mit den beiden Enden der Saite verbundene Elektronik-Vorrichtung kann die Saite zum Schwingen bringen und eine mit der Schwingungsfrequenz der Saite verknüpfte Variable, zum Beispiel die Zeitdauer einer Schwingungsperiode oder einer Gruppe von solchen ermitteln. Diese Variable gibt dann ein Mass für die die Saite spannende Kraft und damit auch für die mit der letzteren verknüpfte, auf den Kraftaufnehmer einwirkende Kraft.

Das Wandelelement könnte jedoch als länglichen Hauptabschnitt statt einer beim Messen schwingenden Saite einen elektrisch leitenden, geraden Draht aufweisen, der durch eine an seinen Enden angreifende, veränderliche Zugkraft elastisch gedehnt wird und dabei seinen elektrischen Widerstand ändert. Der momentane elektrische Widerstand könnte dann zur Bildung eines elektrischen Signals verwendet werden, das ein Mass für die zu messende Kraft gibt. Das Wandelelement könnte des weitern ein längliches, elastisch dehnbares Tragorgan und einen auf diesem aufgebrachten Dehnungsmessstreifen aufweisen. Ferner könnte man ein Wandelelement mit einem piezoelektrischen Körper und Elektroden verwenden. Ein solches Wandelelement könnte dann zum Beispiel derart angeordnet und gehalten werden, dass es unter der Einwirkung einer bei den beiden Halterungen an ihm angreifenden Druckkraft ein elektrisches Signal abgibt.

Die Kraft-Übertragungsvorrichtung ist bei den Enden ihrer Übertragungsglieder mit Gelenken, nämlich Beigegelenken, versehen und soll auf jeden Fall ermöglichen, ihren Kraftaufnehmer, ihre Übertragungsglieder und mindestens eine der bei Angriffsstellen am Wandelelement angreifenden Halterungen bezüglich des Referenzorgans zu bewegen, wodurch der Abstand der beiden Angriffsstellen geändert werden kann. Bei einem eine Saite aufweisenden, von der Kraft-Übertragungsvorrichtung gehaltenen Wandelelement sind jedoch die beim Messen stattfindenden Verschiebungen des Kraftaufnehmers und der verschiebbaren Angriffsstelle bzw. Angriffsstellen sehr gering, insbesondere sehr viel kleiner als der Abstand der beiden Angriffsstellen und auch viel kleiner als die Abstände der zum jeweils gleichen Übertragungsglied gehörenden Gelenke. Die beim Messen von in einem vorgesehenen Messbereich liegenden Kräften stattfindenden Abstandsänderungen der beiden Angriffsstellen betragen nämlich normalerweise höchstens etwa 0,2% oder sogar nur höchstens 0,1% des Abstands der beiden Angriffsstellen. Die verschiedenen Teile der Kraft-Übertragungsvorrichtung sind daher bezüglich einander und insbesondere bezüglich des Referenzorgans eigentlich nur virtuell bewegbar. Messwandler mit einer Saite werden übrigens häufig als starre oder als weglos arbeitende Messwandler bezeichnet. Desgleichen arbeiten mindestens auch Messwandler-Ausführungsformen, die als Wandelelement einen geraden, elastisch dehnbaren, beim Dehnen seinen elektrischen Widerstand ändernden Draht oder ein piezoelektrisches Element aufweisen, weglos. Auch bei Verwendung eines Wandelelements mit einem auf einem elastisch dehnbaren Tragorgan angeordneten Dehnungsmessstreifen sind die beim Messen stattfindenden Bewegungen nur klein, so dass ein Messwandler mit einem derartigen Wandelelement auch noch praktisch weglos arbeitet.

Der Erfindungsgegenstand wird nun anhand in der Zeichnung dargestellter Ausführungsbeispiele näher erläutert. In der Zeichnung zeigt
die Figur 1 einen etwas vereinfachten Schnitt durch einen Kraft-Messwandler mit einer Kraft-Übertragungsvorrichtung,
die Figur 2 einen Schnitt durch den Messwandler entlang der Linie II-II der Figur 1,
die Figur 3 einen zwischen den beiden Plättchen der Kraft-Übertragungsvorrichtung hindurch verlaufenden Schnitt durch diese Vorrichtung, in grösserem Massstab,
die Figur 4 einen gleich wie in der Figur 2 gelegten Schnitt durch die Kraft-Übertragungsvorrichtung, im gleichen Massstab wie die Figur 3,
die Figur 5 einen zu den Zeichenebenen der Figuren 3 sowie 4 rechtwinkligen Schnitt durch die Kraft-Übertragungsvorrichtung,
die Figur 6 eine Draufsicht auf das Wandelelement und den mit diesem zusammenhängenden, nach der Montage zu entfernenden Hilfs-Verbindungssteg, in der gleichen Blickrichtung und im gleichen Massstab wie die Figur 3,
die Figur 7 eine stark schematisierte, diagrammartige Darstellung der Wirkungsweise der Kraft-Übertragungsvorrichtung,
die Figur 8 eine Draufsicht auf die dem Wandelelement zugewandte Seite des Plättchens einer Variante der Kraft-Übertragungsvorrichtung,
die Figur 9 einen der Figur 4 entsprechenden Schnitt durch einen Bereich einer Variante der Kraft-Übertragungsvorrichtung,
die Figur 10 eine zur Figur 7 analoge Darstellung der Wirkungsweise einer Variante der Kraft-Übertragungsvorrichtung und
die Figur 11 eine Draufsicht auf die dem Wandelelement zugewandte Seite des Plättchens einer Variante der Kraft-Übertragungsvorrichtung.

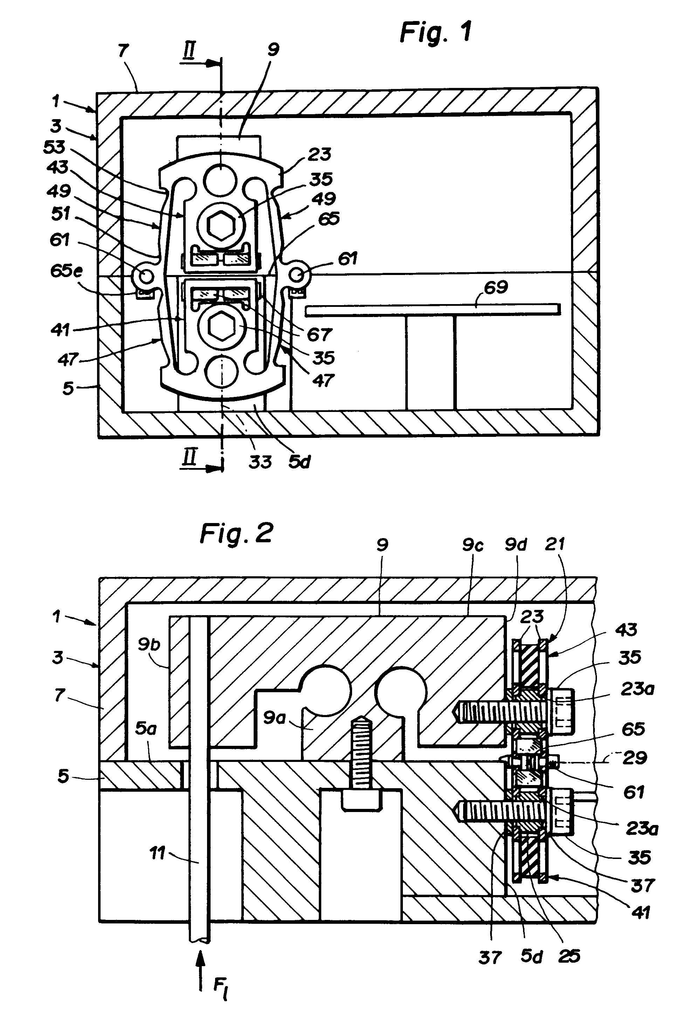

Der in den Figuren 1 und 2 ersichtliche Kraft-Messwandler 1 weist einen unbewegbar an einem nicht gezeichneten Gestell und/oder Gehäuse einer Dosiereinrichtungs-Waage befestigten Bauteil, nämlich ein allseitig geschlossenes Gehäuse 3 mit einem Unterteil 5 und einem lösbar mit diesem verschraubten Oberteil 7 auf. Der Unterteil 5 bildet im Inneren des Gehäuses eine horizontale Auflagefläche 5a und eine vertikale, ebene Tragfläche 5d. Ein aus einem einstückigen Körper bestehendes Krafteinleitorgan 9 besitzt einen auf der Auflagefläche 5a aufliegenden und am Gehäuse-Unterteil 5 festgeschraubten Lagerteil 9a und einen mit diesem um eine horizontale Achse schwenkbar verbundenen Hebel mit zwei Hebelarmen 9b und 9c, wobei der Hebel durch ein Biegegelenk mit dem Lagerteil 9a verbunden ist. Der nicht gezeichnete Lastträger der Waage ist mit dem Krafteinleitorgan 9 über Verbindungs- und Übertragungsmittel verbunden, die etwa ein zur Kraftuntersetzung dienendes Hebewerk aufweisen und von denen in der Figur 2 nur eine Stange 11 gezeichnet ist, die durch ein Loch des Gehäuse-Unterteils 5 hindurch von unten her in den Innenraum des Gehäuses 3 hineinragt und am Hebelarm 9b befestigt ist. Der andere Hebelarm 9c ist an seinem freien Ende durch eine vertikale, ebene, mit der Tragfläche 5d fluchtende Tragfläche 9d begrenzt.

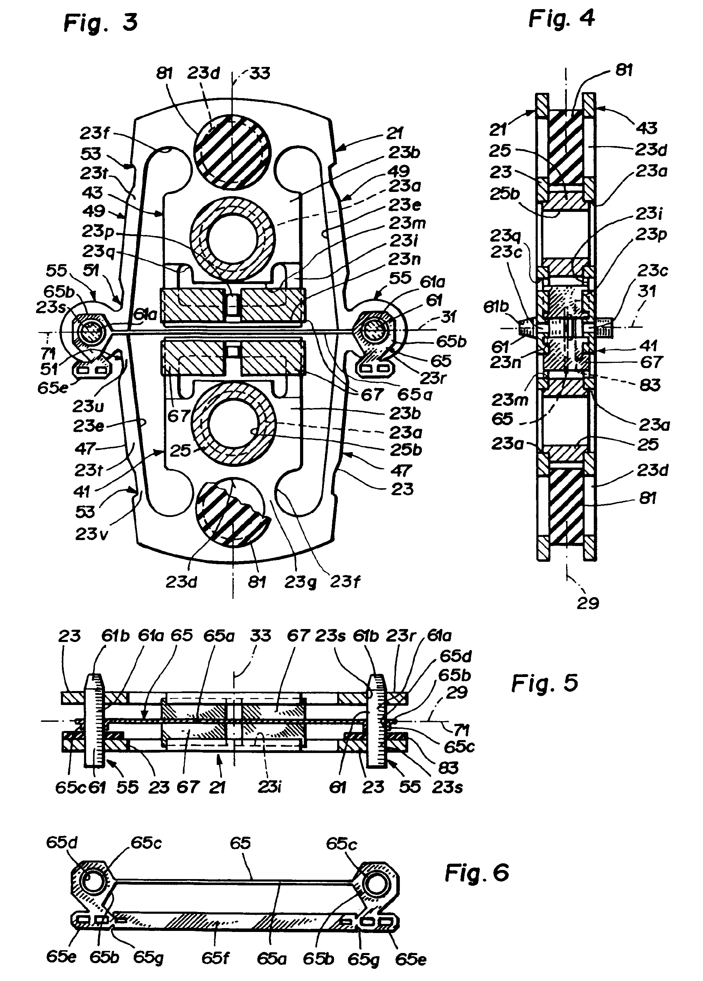

Im Innern des Gehäuses 3 ist eine als Ganzes mit 21 bezeichnete, separat in den Figuren 3, 4, 5 dargestellte Kraft-Übertragungsvorrichtung angeordnet, die zwei zumindest im allgemeinen ebene, zu einander parallele Plättchen 23 aufweist. Diese sind je mit zwei paarweise miteinander fluchtenden, besonders deutlich in den Figuren 3 sowie 4 ersichtlichen Löchern 23a, nämlich Bohrungen versehen. Zwei Distanzhülsen 25 sind zwischen den beiden Plättchen 23 bei deren paarweise miteinander fluchtenden Löchern 23a angeordnet. Jede Distanzhülse 25 hat einen zylindrischen Mittelteil und an dessen Enden je einen etwas dünneren, mit kleinem radialem Spiel oder satt in eines der Löcher 23a hineinragenden Hals. Die bei den Übergängen zwischen dem Mittelteil und den beiden Hälsen der Distanzhülsen vorhandenen, ebenen, radialen Schulterflächen der Distanzhülsen 25 liegen an den einander zugewandten Flächen der beiden Plättchen 23 an.

Die beiden Plättchen 23 haben die gleichen Umrissformen, Umrissabmessungen sowie Dicken und sind zumindest im wesentlichen und nämlich vollständig identisch ausgebildet. Die beiden Plättchen 23 sind dementsprechend bezüglich einer zwischen ihnen hindurch verlaufenden, vertikalen Symmetrieebene 29 zumindest im wesentlichen und nämlich genau spiegelsymmetrisch zu einander. Wie noch näher erläutert wird, sind die beiden Plättchen zudem zumindest im wesentlichen spiegelsymmetrisch bezüglich von zwei Symmetrieebenen 31 und 33, die rechtwinklig zu den von den Plättchen aufgespannten Ebenen sowie rechtwinklig zu einander, und nämlich horizontal bzw. vertikal sind. Die beiden Distanzhülsen 25 sind bezüglich der horizontalen Symmetrieebene 31 spiegelsymmetrisch zu einander und haben ferner durch die vertikale Symmetrieebene 33 verlaufende Achsen, so dass jede Distanzhülse selbst spiegelsymmetrisch zur Symmetrieebene 33 ist. Die durchgehenden Löcher der beiden Distanzhülsen 25 bilden je ein Befestigungsloch 25b. Die Kraft-Übertragungsvorrichtung 21 ist mit die beiden Befestigungslöcher 25b durchdringenden Befestigungselementen, nämlich Schrauben 35 am Gehäuse-Unterteil 5 bzw. am Hebelarm 9c befestigt. Zwischen den Tragflächen 5d, 9d und dem sich näher bei diesen befindenden Plättchen 23 sind dieses in Abstand von den Tragflächen 5d, 9d haltende, von den Schrauben 35 durchdrungene Unterlagsscheiben 37 angeordnet. Zwischen den Köpfen der Schrauben 35 und dem weiter von den Tragflächen 5d, 9d entfernten Plättchen sind ebenfalls Unterlagsscheiben 37 angeordnet.

Die mittleren, die vertikale Symmetrieebene 33 kreuzenden und die Löcher 23a enthaltenden Abschnitte 23b der Plättchen 23 sind durch einen von der horizontalen Symmetrieebene 31 durchdrungenen, spaltförmigen Zwischenraum 23c von einander getrennt. Auf der dem Zwischenraum 23c abgewandten Seite der Löcher 23a sind kreisförmige Löcher 23d vorhanden. Ferner ist jedes Plättchen 23 auf beiden Seiten der Symmetrieebene 33 mit einer sich über den grössten Teil der rechtwinklig zur Symmetrieebene 31 gemessenen, längsten Plättchen-Abmessung erstreckenden schlitzförmigen Öffnung 23e versehen. Diese schlitzförmigen Öffnungen 23e haben an beiden Enden auf ihren einander zugewandten Seiten eine einen Teil eines Kreises bildende Erweiterung 23f. Die Löcher 23d begrenzen zusammen mit den von den Erweiterungen 23f gebildeten Teilen der seitlichen Ränder der Plättchen-Abschnitte 23b relativ schmale, in der Mitte verengte Stege 23g. Die Plättchen 23 haben auf ihren einander zugewandten Seiten zwischen dem Loch 23a und dem Zwischenraum 23c je eine Ausnehmung 23i, die sich über die ganze Breite der Plättchen-Abschnitte 23b erstreckt, und deren Tiefe ungefähr gleich der halben Dicke der Plättchen ist. Jede Ausnehmung 23i bildet einander zugewandte, zur Symmetrieebene 31 parallele Grenz- und/oder Anschlag- oder Anlageflächen 23m und 23n. Jede Ausnehmung 23i hat in ihrem mittleren Bereich - d.h. bei der vertikalen Symmetrieebene 33 - einen vom Ausnehmungsgrund weg zum gegenüberstehenden Plättchen hin vorstehenden Anschlag- oder Distanznocken 23p mit rechteckigem Umriss, welcher die Ausnehmung 23i in zwei Hälften unterteilt. Die Höhe der Anschlag- oder Distanznocken 23p ist dabei gleich der Tiefe der Ausnehmungen 23i. Die beiden Plättchen 23 sind im Bereich jeder Ausnehmung 23i mit einem länglichen, im allgemeinen parallel zum Zwischenraum 23c verlaufenden Loch 23q versehen, dessen der Symmetrieebene 31 abgewandte Begrenzung mindestens im wesentlichen mit einem Teil der der Symmetrieebene 31 abgewandten Begrenzung der Ausnehmung 23i fluchtet bzw. zusammenfällt. Die Anschlag- oder Distanznocken 23p und Löcher 23q sind in der oberen Hälfte der Figuren 3, 4 eventuell etwas anders ausgebildet als in den untern Hälften dieser Figuren, wobei nämlich die obern Nocken etwas länger sind und in die Löcher 23g hineinragende Vorsprünge bilden. Die beiden Plättchen 23 sind abgesehen von den leicht unterschiedlichen Ausbildungen der Nocken 23p und Löcher 23q spiegelsymmetrisch bezüglich der Symmetrieebene 31 und vollkommen spiegelsymmetrisch bezüglich der Symmetrieebene 33. Jedes Plättchen 23 hat auf den einander abgewandten Seiten der beiden schlitzförmigen Öffnungen 23e je ein auf der Symmetrieebene 31 liegendes Auge 23r mit einem kreisförmigen Loch 23s. Jedes dieser Augen 23r hängt über zwei längliche, schenkel- oder stegförmige, im folgenden als Stege 23t bezeichnete Abschnitte und bei den zwei Enden von diesen vorhandene, Einschnürungen 23u, 23v bildende Abschnitte mit den zwei sich auf einander abgewandten Seiten der Symmetrieebene 31 befindenden Randabschnitten der betreffenden Plättchen zusammen. Jede Einschnürung 23u, 23v ist in einer rechtwinkligen Projektion auf eine Ebene, die zu der von den Plättchen aufgespannten Ebenen parallel ist, auf der äusseren Seite durch eine Ausnehmung und auf ihrer an die schlitzförmigen Öffnungen 23e angrenzenden Seite durch gerade Ränder begrenzt.

Im folgenden werden unter einander überdeckenden Abschnitten der beiden Plättchen 23 jeweils diejenigen Plättchen-Abschnitte verstanden, die in der zu den von den Plättchen aufgespannten Ebenen rechtwinkligen Projektion - und also in den Figuren 1 sowie 3 - zusammenfallen. Die beiden unteren, die vertikale Symmetrieebene 33 kreuzenden, einander überdeckenden Abschnitte 23b der beiden Plättchen 23 bilden zusammen mit der von ihnen gehaltenen Distanzhülse 25 das starr am Gehäuse-Unterteil 5 befestigte Referenzorgan 41 der Kraft-Übertragungsvorrichtung 21. Die beiden oberen, die vertikale Symmetrieebene 33 kreuzenden, einander überdeckenden Abschnitte 23b der beiden Plättchen bilden zusammen mit der von ihnen gehaltenen Distanzhülse 25 den am Krafteinleitorgan 9 befestigten Kraftaufnehmer 43 der Kraft-Übertragungsvorrichtung 21. Die einander überdeckenden Stege 23t zwischen den unteren Plättchen-Randabschnitten und den Augen 23r bilden je ein längliches, gerades, schenkel- oder armförmiges Übertragungsglied 47. Jedes Paar der einander überdeckenden, zwischen den oberen Plättchen-Randabschnitten und den Augen 23r vorhandenen Stege 23t bildet ein längliches, schenkel- oder armförmiges Übertragungsglied 49. Jedes Paar der einander überdeckenden Einschnürungen 23u bildet ein Biegegelenk 51 und jedes Paar einander überdeckender Einschnürungen 23v ein Biegegelenk 53. Gelenke in der Art der Biegegelenke 51, 53 werden übrigens auch als virtuelle Gelenke bezeichnet. Die Biegegelenke 51 verbinden die einen Enden der vier Übertragungsglieder 47, 49 schwenkbar mit einem Paar sich überdeckender Augen 23r. Die Biegegelenke 53 verbinden die den Augen abgewandten Enden der beiden Übertragungsglieder 47 mit dem Referenzorgan 41 und die den Augen abgewandten Enden der beiden Übertragungsglieder 49 mit dem Kraftaufnehmer 43. Die Gelenke 51, 53 ermöglichen Schwenkbewegungen der Übertragungsglieder entlang den von den Plättchen aufgespannten Ebenen und also um zu diesen Ebenen rechtwinklige Schwenkachsen. Die vier Übertragungsglieder bilden also zusammen mit den sie verbindenden Teilen einen Rahmen, der in der von ihm aufgespannten Ebene deformierbar ist.

Die parallel zu den Plättchen-Enden, d.h. zu den von den Plättchen aufgespannten Ebenen und rechtwinklig zur Längsrichtung der Stege 23t gemessene Breite der Einschnürungen 23u, 23v ist bei deren schmälster Stelle zum Beispiel ungefähr gleich der analog gemessenen, halben Maximal-Breite der Stege 23t. Die Biegefestigkeit der Stege 23t und Einschnürungen 23u, 23v ist für Biegungen entlang der Plättchen-Ebenen proportional zur dritten Potenz der Breite. Die Biegefestigkeit der die Biegegelenke 51, 53 bildenden Einschnürungen beträgt also für Biegungen entlang den Plättchen-Ebenen ungefähr einen Achtel der Biegefestigkeit der mittleren Hauptabschnitte der Stege 23t. Im übrigen könnten die Breiten der Einschnürungen 23u, 23v auch kleiner als die halben Maximalbreiten der Stege 23t gemacht werden.

In den miteinander fluchtenden Löchern 23s von jedem Paar einander überdeckender Augen 23r ist ein einstückiger, zum Beispiel zylindrischer Stift 61 gehalten, nämlich eingepresst. Die Augen 23r dienen also als Halteabschnitte zum Halten der Stifte 61. Jeder Stift 61 bildet zusammen mit den zwei ihn haltenden Augen 23r eine Halterung 55. Ein einstückiges Wandelelement 65 weist einen länglichen Hauptabschnitt, nämlich eine Saite 65a auf, die beidenends mit einer Öse 65b zusammenhängt. Jede Öse 65b hat aussen einen in der gleichen Ebene wie die Saite 65a liegende, ebene Ringscheibe und innen einen auf die eine Seite von dieser wegragenden Kragen 65c, der ein im wesentlichen zylindrisches Loch 65d begrenzt. Das Loch 65d jeder Öse 65b wird von einem der Stifte 61 durchdrungen und bildet mit diesem zusammen einen Press-Sitz. Die Stifte 61 halten also das Wandelelement 65 in der Mitte zwischen den beiden Plättchen 23. Die sich in den beiden Löchern 65d des Wandelelements 65 befindenden Abschnitte der beiden Stifte 61 bilden die Angriffsstellen 61a, bei denen die Kraft-Übertragungsvorrichtung 21 mit einer Zugkraft am Wandelelement 65 angreift. In den Figuren 3, 5 ist auch noch die Angriffsstellen-Verbindungs-Gerade 71 bezeichnet, welche durch die beiden Angriffsstellen 61a oder - genauer gesagt - durch die beiden Zentren der in den Wandelelement-Löchern 65d sitzenden Abschnitte der Stifte 61 verläuft und mit der Schnittgeraden der beiden Symmetrieebenen 29 und 31 identisch ist. Jede Öse 65b hängt noch mit einem zwischen den Rändern der beiden Plättchen 23 herausragenden, elektrischen Anschluss 65e zusammen. Die beiden Anschlüsse 65e sind durch nicht gezeichnete, elektrische Leiter - etwa isolierte Drähte - mit einer im Gehäuse 3 befestigten Elektronik-Vorrichtung 69 verbunden, die eine am Gehäuse-Unterteil befestigte Schaltungsplatte aufweist.

Die Saite 65a verläuft durch die Symmetrieebene 31. Auf beiden Seiten von dieser sind je zwei quaderförmige Permanentmagnete 67 zwischen den beiden Plättchen 23 angeordnet und nämlich in deren Ausnehmungen 23i eingesetzt. Die Permanentmagnete 67 sind in einem entlang der Vertikalebene 33 verlaufenden Schnitt derart bemessen, dass sie satt zwischen die Grundflächen von einem Paar sich gegenüberstehender Ausnehmungen 23i der beiden Plättchen hineinpassen und leicht zwischen den Ausnehmungs-Grundflächen eingeklemmt werden. Die Permanentmagnete liegen mindestens an denjenigen Grenz- und/oder Anschlag- oder Anlageflächen 23n an, welche durch die sich näher beim Wandelelement 65 befindenden Längsbegrenzungen der Ausnehmungen 23i gebildet sind. Die Permanentmagnete stehen auf ihren der Symmetrieebene 33 zugewandten Seiten ferner an den Anschlag- oder Distanznocken 23p an. Es ist also sowohl zwischen den sich auf verschiedenen Seiten der Symmetrieebene 31 als auch zwischen den sich auf verschiedenen Seiten der Symmetrieebene 33 befindenden Magneten ein freier Zwischenraum vorhanden. Die Permanentmagnete 67 sind derart rechtwinklig zur Symmetrieebene 31 magnetisiert, dass sich auf ihren dieser zugewandten Seiten jeweils ein magnetischer Nordpol und ein magnetischer Südpol gegenüberstehen. Die Magnete erzeugen also - zumindest wenn man von Randeffekten absieht - die Saite 65a rechtwinklig kreuzende Magnetfelder. Die sich bezüglich der Symmetrieebene 31 gegenüberstehenden Magnete ziehen sich daher gegenseitig an und werden durch diese Anziehungskraft gegen die Grenz- und/oder Anschlag- oder Anlageflächen 23n gezogen. Die sich auf der gleichen Seite der Symmetrieebene 31 neben einander befindenden Permanentmagnete 67 sind entgegengesetzt polarisiert und ziehen sich zu einander hin und gegen die als Distanzmittel dienenden Anschlag- oder Distanznocken 23p. Die vier Permanentmagnete halten einander also infolge der von ihnen erzeugten Magnetfelder ohne zusätzliche Befestigungsmittel in den beschriebenen Lagen, könnten aber selbstverständlich noch durch Klebverbindungen oder dergleichen an den Plättchen befestigt sein.

Beim Referenzorgan 41 und beim Kraftaufnehmer 43, nämlich bei den paarweise miteinander fluchtenden Löchern 23d, ist je ein Schwingungsdämpfer 81 angeordnet, der aus einer kreisförmigen Scheibe besteht, deren Durchmesser ein wenig grösser ist als derjenige der Löcher 23d. Die axial gemessene Dicke der Schwingungsdämpfer 81 ist mindestens annähernd gleich dem Abstand der einander zugewandten Flächen der beiden Plättchen 23. Die Schwingungsdämpfer 81 sind an einem oder eventuell beiden Plättchen befestigt, nämlich festgeklebt. Auf jedem der Stifte 61 ist mindestens ein ringförmiger Schwingungsdämpfer 83 befestigt, nämlich zwischen der Öse 65b des Wandelelements 65 und einem der Plättchen 23 auf den Stift aufgepresst.

Die beiden Plättchen 23 werden bei den Augen 23r durch die Stifte 61 starr miteinander verbunden und zusammengehalten. Ferner gewährleisten die Distanzhülsen 25 bereits vor dem Festschrauben der Kraft-Übertragungsvorrichtung 21 am Gehäuse-Unterteil 5 und am Krafteinleitorgan 9, dass sich die beiden Plättchen im Bereich des Referenzorgans 41 und des Kraftaufnehmers 43 nicht oder höchstens sehr wenig parallel zu den von den Plättchen aufgespannten Ebenen gegen einander verschieben können. Wenn die Kraft-Übertragungsvorrichtung 21 mit den Schrauben 35 am Gehäuse-Unterteil 5 und Krafteinleitorgan 9 festgeschraubt ist, verbinden die Schrauben die beiden Plättchen im Bereich des Referenzorgans 41 bzw. Kraftaufnehmers 43 dann starr miteinander.

Die beiden Plättchen 23 und das Wandelelement 65 bestehen aus metallischen unmagnetischen, elastisch deformierbaren Materialien, zum Beispiel aus einer Kupfer-Beryllium-Legierung. Die beiden Stifte 61 bestehen aus einem elektrisch isolierenden, starren und seine Form im Lauf der Zeit möglichst wenig ändernden Material, etwa kristallinem Aluminiumoxyd, d.h. einem Korund. Der Korund kann dabei als glasklarer sowie farbloser Saphir oder als farbiger Saphir oder Rubin vorliegen. Die Schwingungsdämpfer 81, 83 bestehen aus einem gummielastischen Material, zum Beispiel dem unter dem Markennamen VITON von E.I. du Pont de Nemours & Co. Inc. gelieferten Fluorelastomer.

Die Plättchen 23 können zum Beispiel durch Film-Ätzverfahren hergestellt werden. Zur Herstellung einer Serie Plättchen kann man zuerst volle, tafelförmige Blechteile mit viereckigem Umriss herstellen, von denen jeder zur Bildung von mindestens eines Plättchens und vorzugsweise zur Bildung von mehreren, beispielsweise je 100 Plättchen dient. Dann werden von Filmen durch ein fotografisches Verfahren die vorgesehenen Umrissformen und Löcher der Plättchen auf beide Seiten eines Blechteils und die zu bildende Ausnehmung 23i auf eine Seite des Blechteils übertragen, wobei auch noch zum Zusammenhalten der benachbarten Plättchen dienende Hilfs-Verbindungsstege vorgesehen werden. Danach wird der Blechteil in ein Ätzmittelbad gehängt, so dass die Plättchen-Umrissformen sowie Löcher von beiden Seiten des Blechteils her und die Ausnehmungen 23i von einer Seite des Blechteils her herausgeätzt werden. Nach dem Herausnehmen des geätzten Blechteils aus dem Ätzmittelbad werden dann noch die die benachbarten Plättchen verbindenden Hilfs-Verbindungsstege entfernt.

Die Plättchen können statt durch Ätzen auch durch Stanzen hergestellt werden. Dabei kann man zum Beispiel zuerst einen vollen, bandförmigen Blechteil herstellen und aus diesem ein Plättchen nach dem anderen herausstanzen. Die Ausnehmungen 23i können entweder durch Pressen oder durch eine nach dem Stanzen stattfindende, spanabhebende Bearbeitung gebildet werden. Die mit den Ausnehmungen 23i versehenen Teile der Plättchen-Abschnitte 23b werden vorzugsweise vorübergehend ein wenig auf diejenige Seite gebogen die bei der fertig gestellten Kraft-Übertragungsvorrichtung dem jeweils anderen Plättchen zugewandt ist. Durch eine solche Biegung kann eine elastische Vorspannung erzeugt werden, welche die nachher eingesetzten Permanentmagnete einklemmt.

Die Wandelelemente 65 können bei der serienmässigen Fabrikation ebenfalls durch Ätzen oder Stanzen aus vollen, tafel- oder bandförmigen Blechteilen hergestellt werden. Die Kragen 65c werden durch plastisches Verformen gebildet. Bei der Herstellung jedes Wandelelements 65 wird vorteilhafterweise beim Ätz- oder Stanz- und Verformungsvorgang zuerst ein Werkstück mit der in der Figur 6 dargestellten Form gebildet, das zusätzlich zur Saite 65a, den beiden Ösen 65b und den Anschlüssen 65e noch einen mit diesen zusammenhängenden Hilfs-Verbindungssteg 65f aufweist. Dieser erleichtert den Transport sowie die Montage des Wandelelements 65.

Beim Zusammenbauen einer Kraftübertragungsvorrichtung 21 kann man zum Beispiel zuerst ein Paar Stifte 61 - beginnend mit ihren konischen Endabschnitten 61b - in ein Plättchen 23 stecken und danach die Schwingungsdämpfer 83 sowie die Ösen 65b des noch den Hilfs-Verbindungssteg 65f aufweisenden Wandelelements 65 auf die Stifte 61 aufpressen. Anschliessend wird das zweite Plättchen derart auf die Stifte aufgepresst, dass die beiden Plättchen den vorgesehenen Abstand haben. Der Hilfs-Verbindungssteg 65f wird vor oder nach dem Aufpressen des zweiten Plättchens bei Soll-Trennstellen 65g von den beiden Anschlüssen 65e getrennt. Wenn die Plättchen 23 durch die Stifte 61 miteinander verbunden sind, werden unter einer vorübergehenden, elastischen Deformation der Plättchen noch die vier Permamentmagnete 67 sowie die beiden Distanzhülsen 25 eingesetzt. Schliesslich werden noch die Schwingungsdämpfer 81 eingesetzt und festgeklebt. Die Löcher 23q dienen als Sichtfenster, durch welche nach dem Einsetzen der Permanentmagnete 67 deren Stellung von aussen visuell überprüft werden kann.

Die Saite 65a ist im Querschnitt rechteckig, wobei die rechtwinklig zur Plättchen-Ebene gemessene Querschnittabmessung der Saite kleiner ist als deren parallel zur Plättchen-Ebene gemessene Querschnittabmessung. Beim Messen leitet die Elektronik-Vorrichtung 69 einen zeitlich periodisch ändernden, elektrischen Strom, nämlich einen Wechselstrom, durch die Saite hindurch, der zusammen mit den die Saite kreuzenden Magnetfeldern Kräfte erzeugt. Die Saite führt dann Schwingungen aus, bei denen sie rechtwinklig zu den Zeichenebenen der Figuren 1 und 3 ausgelenkt wird und bei denen die Magnetfelder in der Saite eine elektrische Spannung induzieren. Die Saite ist entsprechend der Anordnung der Permanentmagnete bestrebt, mit der zweiten Eigenschwingungsfrequenz zu schwingen und die Elektronik-Vorrichtung ist mit Schaltungsmitteln ausgerüstet, um die Frequenz des durch die Saite hindurch geleiteten Stromes derart zu regeln, dass die Saite auch tatsächlich mit der zweiten Eigenschwingungsfrequenz schwingt.

Der Abstand der Zentren der beiden Löcher 65d des Wandel elements 65 ist vor dessen Montage im entspannten Zustand geringfügig, zum Beispiel etwa 1% bis 2% der Saitenlänge, kleiner als der Abstand der Zentren der Löcher 23s der sich ebenfalls im entspannten Zustand befindenden Plättchen 23. Wenn das Wandelelement 65 dann durch die Stifte 61 zwischen den beiden Plättchen 23 gehalten ist, bewirkt die elastische Verformbarkeit der Plättchen 23 und insbesondere von deren die Übertragungsglieder 47, 49 sowie Gelenke 51, 53 bildenden Abschnitte eine Vorspannung der Saite 65a. Die durch diese Vorspannung erzeugte, konstante Vorspann- oder Ruhekraft habe den Wert F_{c}. Nun wird angenommen, dass vom nicht gezeichneten Lastträger der Dosiereinrichtungs-Waage, zu welcher der Messwandler 1 gehört, eine in der Figur 2 mit F₁ bezeichnete Kraft auf das Krafteinleitorgan 9 übertragen wird, das nun seinerseits eine Kraft Fᵢ in den Kraftaufnehmer 43 der Kraft-Übertragungsvorrichtung 21 einleitet.

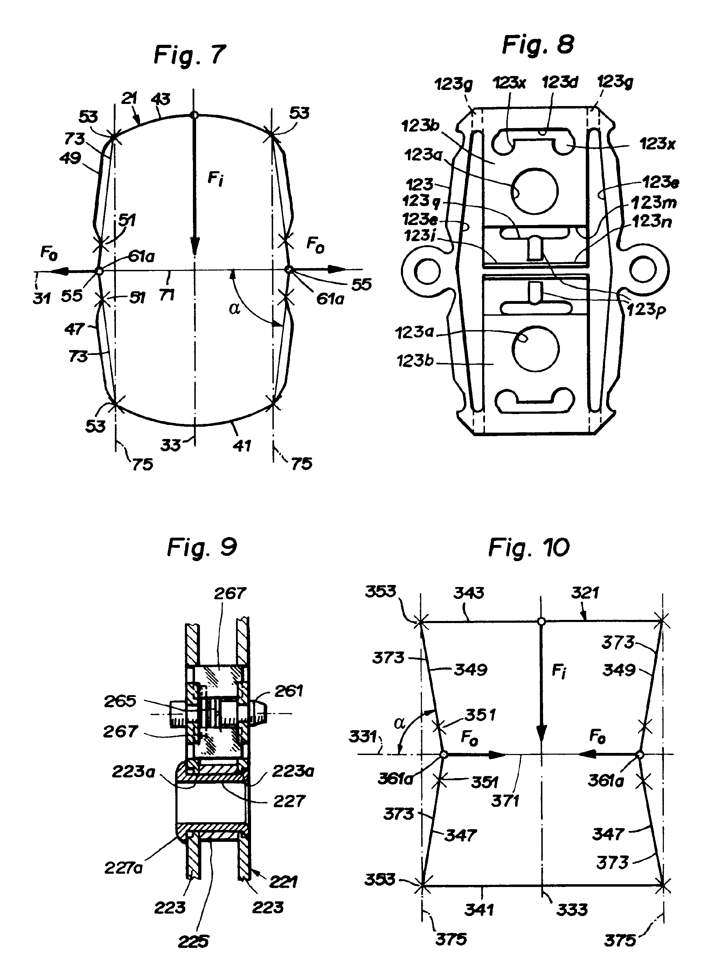

Die Wirkungsweise der Kraft-Übertragungsvorrichtung 21 wird jetzt anhand der Figur 7 erläutert. In dieser sind das am Gehäuse 3 befestigte Referenzorgan 41, der am Krafteinleitorgan 9 befestigte Kraftaufnehmer 43 sowie die Übertragungsglieder 47, 49 schematisch durch Striche, die Biegegelenke 51, 53 durch Kreuze und die Halterungen 55 sowie Angriffsstellen 61a durch Kreise angedeutet. Ferner ist in der Figur 7 durch eine strichpunktierte Linie die Symmetrieebene 31 und die in dieser Projektion mit dieser zusammenfallende, durch die beiden Angriffsstellen 61a verlaufende Angriffsstellen-Verbindungs-Gerade 71 dargestellt. Die Nummern 73 bezeichnen die Gelenk-Verbindungs-Geraden, die je einem Übertragungsglied 47, 49 zugeordnet sind und durch die sich an dessen beiden Enden befindenden Biegegelenke 51 und 53 verlaufen. In der Figur 7 sind auch noch zwei Ebenen 75 eingezeichnet, welche die Symmetrie-Ebenen 31 sowie die Angriffsstelle-Verbindungs-Gerade 71 zwischen den beiden Angriffsstellen 61a rechtwinklig kreuzen und von denen jede durch zwei Biegegelenke 53 verläuft, die über Übertragungsglieder 47, 49 mit der gleichen Angriffstelle 61a verbunden sind.

Die Gelenk-Verbindungs-Geraden 73 bilden mit der Angriffsstellen-Verbindungs-Geraden 71 je einen von 90° verschiedenen Winkel alpha. Dieser Winkel alpha hat für alle vier Gelenk-Verbindungs-Geraden 73 den gleichen Wert. Die Gelenk-Verbindungs-Geraden 73, die zu den beiden das Referenzorgan 41 mit je einem Auge 23r verbindenden Übertragungsgliedern 47 gehören, sind in der Richtung vom Gelenk 53 zum Gelenk 51 hin von einander weggeneigt. Die zu den beiden Übertragungsgliedern 49 gehörenden Gelenk-Verbindungs-Geraden 73 sind ebenfalls in der Richtung vom Gelenk 53 zum Gelenk 51 hin von einander weggeneigt. Jedes Gelenk 51 ist also von der Ebene 75, welche durch das mit ihm über ein Übertragungsglied verbundenen Gelenke 53 verläuft - parallel zur Geraden 71 - entfernt, und zwar in derjenigen Richtung, welche von der Symmetrieebene 33 und damit auch von der nicht, mit dem betreffenden Gelenk 51 verbundenen Angriffsstelle 6a weg verläuft. Dementsprechend ist der parallel zur Geraden 71 gemessene Abstand der beiden die Übertragungsglieder 47 mit den Augen 23r und Angriffsstellen 61a verbindenden Gelenke 51 grösser als der parallel zur Geraden 71 gemessene Abstand der diese Übertragungsglieder 47 mit dem Referenzorgan 41 verbindenden Gelenke 53. Entsprechendes gilt für die an den Enden der zwei Übertragungsglieder 49 vorhandenen Gelenke 51, 53.

Die vom Krafteinleitorgan 9 auf den Kraftaufnehmer 43 ausgeübte Kraft Fᵢ ist zumindest praktisch parallel zu den Plättchen-Ebenen sowie senkrecht nach unten gerichtet. Diese Kraft Fᵢ verschiebt den Kraftaufnehmer 43 parallel zu den von den Plättchen 23 aufgespannten Ebenen gegen das am Gehäuse 3 befestigte Referenzorgan 41. Es sei hier angemerkt, dass die Angriffsstelle der Kraft Fᵢ in der Figur 7 zwar schematisch beim oberen Rand der Kraft-Übertragungsvorrichtung 21 gezeichnet ist. In Wirklichkeit wird die Kraft Fᵢ und die vom Gehäuse-Unterteil 5 auf das Referenzorgan 41 übertragene Gegenkraft jedoch bei den Schrauben 35 und also bei Stellen in die Kraft-Übertragungsvorrichtung 21 eingeleitet, die sich näher bei der Symmetrieebene 31 und Saite 65a befinden als die Biegegelenke 53. Obschon die Kraft Fᵢ und die besagte, am Referenzorgan 41 angreifende Gegenkraft gegeneinander gerichtet sind, wirken sie in den Plättchen 23 zwischen deren Löchern 23a und den Biegegelenken 53 als Zugkräfte. Dies trägt dazu bei, ein Ausbiegen der Plättchen aus den von ihnen im Ruhezustand aufgespannten Ebenen zu vermeiden.

Die Längen der vier Übertragungsglieder 47, 49 bleiben beim Verschieben des Kraftaufnehmers zumindest annähernd konstant. Eine Annäherung des Kraftaufnehmers 43 an das Referenzorgan 41 verformt und biegt daher die Biegegelenke 51, 53 der Kraft-Übertragungsvorrichtung 21 derart, dass alle vier Übertragungsglieder 47, 49 um die Schwenkachsen der Gelenke 53 von der Symmetrieebene 33 weg verschwenkt werden. Da die Kraft Fᵢ entlang der Symmetrieebene 33 am Kraftaufnehmer 43 angreift, wird sie bei der Übertragung je zur Hälfte auf die beiden Übertragungsglieder 49 verteilt. Die beiden Stifte 61 werden dementsprechend ausgehend von ihrer Ruhestellung je um die gleiche Strecke parallel zu den Plättchen-Ebenen und nämlich parallel zur Angriffsstellen-Verbindungs-Geraden 71 von der Symmetrieebene 33 weg verschoben, so dass der Abstand der beiden Angriffsstellen 61a um die Summe der beiden Verschiebungsstrecken grösser wird. Man kann sich also vorstellen, dass jede Hälfte der Saite 65a durch eine Kraft verlängert wird, die aus der Übertragung und Umwandlung einer Hälfte der Kraft Fᵢ resultiert. Die Angriffsstellen üben daher zusätzlich zu der durch die elastische Vorspannung erzeugten, konstanten Vorspann- oder Ruhekraft F_{c} noch eine variable, zur Kraft Fᵢ proportionale Kraft Fₒ auf die Saite 65a aus, so dass die insgesamt an der Saite angreifende Kraft eine Zugkraft ist, deren Wert gleich der Summe F_{c} + Fₒ ist. In der Figur 7 wurde die Kraft Fₒ durch zwei je bei einer der Angriffsstellen 61a beginnende Pfeile angedeutet. Die bei den beiden Angriffsstellen 61a am Wandelelement 65 angreifenden Kräfte sind zu den von den Plättchen 23 aufgespannten Ebenen parallel und bilden mit der Kraft Fᵢ einen Winkel. Die bei den Angriffsstellen 61a am Wandelelement angreifenden Kräfte sind mindestens annähernd - und nämlich vorzugsweise genau - parallel zu der durch die beiden Angriffsstellen 61a verlaufenden Geraden 71 und dementsprechend mindestens annähernd - und nämlich genaurechtwinklig zur Kraft Fᵢ.

Die Grösse des Verhältnisses zwischen der am Wandelelement 65 angreifenden, variablen Kraft Fₒ und der beim Kraftaufnehmer 43 in die Kraft-Übertragungsvorrichtung 21 eingeleiteten Kraft Fᵢ ist vom Betrag des Winkels alpha abhängig. Wenn dieser grösser als 45° und kleiner als 90° ist, ergibt die Kraft-Übertragungsvorrichtung eine Untersetzung der Kraft, so dass Fₒ kleiner als Fᵢ ist. Beim in den Figuren 1 bis 7 gezeichneten Ausführungsbeispiel beträgt der Winkel alpha ungefähr 84°. Im Idealfall, d.h. wenn die Übertragungsglieder 47, 49 vollkommen starr wären sowie vollkommen konstante Längen hätten, die Biegegelenke 51, 53 widerstandslose Verschwenkungen um in der rechtwinkligen Draufsicht auf die Plättchen-Ebenen punktartige, ausdehnungslose Schwenkachsen ermöglichen würden und die Kraftübertragung vollkommen weglos wäre und/oder nur infinitesimale Bewegungen erfordern würde, gälte für das Übertragungsverhältnis die Beziehung Fᵢ/Fₒ = tg alpha. In diesem Idealfall ergäbe sich für einen Winkel alpha von 84° eine Kraftuntersetzung mit dem Verhältnis Fᵢ/Fₒ = 9,5 : 1. Bei einer konkreten Kraft-Übertragungsvorrichtung 21 wird für alpha ungefähr 84° die Kraft dann gemäss den experimentellen Untersuchungen im Verhältnis 9,1 : 1 untersetzt. Dieses experimentelle Übertragungsverhältnis entspricht dem sich bei "idealer" Übertragung für einen Winkel alpha von 83,73° ergebenden Übertragungsverhältnis.

Das sich bei der Kraftübertragung durch eine Kraft-Übertragungsvorrichtung in der Art der Vorrichtung 21 ergebende Kraftübertragungsverhältnis Fᵢ/Fₒ kann selbstverständlich durch geeignete Festlegung des Winkels alpha auf den gewünschten Wert gebracht werden. Beispielsweise ergibt ein Winkel alpha von 45° zumindest wenn die Gelenke "ideal" wären - eine Kraftübertragung im Verhältnis 1:1. Wenn also ein solches Kraftübertragungsverhältnis erwünscht ist, muss der Winkel alpha ungefähr 45° betragen, wobei der genannte Betrag des Winkels durch eine das nicht ideale Verhalten der Gelenke berücksichtigende Berechnung und/oder durch Versuche bestimmt werden kann. Es besteht auch die Möglichkeit, anstelle einer Untersetzung oder "Abwärts"-Übersetzung der Kraft eine "Aufwärts-Übersetzung oder kurz Übersetzung der Kraft zu erzielen, so dass das Verhältnis Fᵢ/Fₒ kleiner als 1 bzw. das Verhältnis Fₒ/Fᵢ grösser als 1 wird. Zu diesem Zweck braucht man lediglich für den Betrag des Winkels alpha einen Wert zu wählen, der weniger als 45° beträgt, aber noch grösser als 0° ist.

Die Schwingungsfrequenz der Saite 65a kann beim Messen der beim Kraftaufnehmer eingeleiteten Kraft Fᵢ in einem gewissen Bereich variieren, der sich zum Beispiel ungefähr von 10 kHz bis 20 kHz erstreckt. Die Übertragungsglieder 47, 49 und Gelenke 51, 53 sind derart bemessen, dass sie zusammen als Tiefpass-Filter wirken, deren Grenzfrequenzen unterhalb des vorgesehenen Schwingungsfrequenz-Bereichs der Saite 65a liegen. Die zwischen den die Löcher 23a enthaltenden und den an die Gelenke 53 anschliessenden Teilen der Plättchen-Abschnitte 23b vorhandenen, relativ schmalen Stege 23g wirken ebenfalls als Tiefpass-Filter. Ferner können die gummielastischen Schwingungsdämpfer 81, 83 Schwingungen des Referenzorgans 41, des Kraftaufnehmers 43 und der Stifte 61 mindestens teilweise absorbieren und dadurch dämpfen. Die Angriffsstellen 61a, bei denen die Kraft- Übertragungsvorrichtung 21 am Wandelelement 65 angreift, sind daher von den Distanzhülsen 25, bei denen die Kraft- Übertragungsvorrichtung 21 am Gehäuse 3 bzw. Krafteinleitorgan 9 befestigt ist, schwingungsmässig sowohl in Bezug auf Biege-Schwingungen parallel zu den Plättchen-Ebenen als auch in Bezug auf Biege-Schwingungen entlang von zu den Plättchen-Ebenen rechtwinkligen Ebenen gut entkoppelt. Desgleichen ergibt sich auch eine gute Entkopplung für allenfalls auftretende Longitudinal- und/oder Torsions-Schwingungen. Die gute schwingungsmässige Entkopplung der Saite 65a vom Gehäuse 3 und Krafteinleitorgan 9 bewirkt einerseits im ganzen vorgesehenen Schwingungsfrequenz-Bereich einen grossen Gütefaktor der Saiten-Schwingungen und verhindert andererseits weitgehend, dass die Saiten-Schwingungen durch äussere Erschütterungen, Schläge und dergleichen gestört werden.

Die Kraft-Übertragungsvorrichtung 21 hat nur eine verhältnismässig kleine Masse. Dementsprechend haben insbesondere auch die (virtuell) bewegbaren, zur eigentlichen Kraft-übertragung dienenden Teile der Kraft-Übertragungsvorrichtung nur geringe Massen. Durch äussere Erschütterungen bewirkte Beschleunigungen der Kraft-Übertragungsvorrichtung ergeben daher nur kleine Kräfte. Dies trägt zusätzlich zur beschriebenen, guten schwingungsmässigen Entkopplung dazu bei, Störeinflüsse von äusseren Erschütterung gering zu halten.

Die Kraft-Übertragungsvorrichtung 21 ist im Verhältnis zur Länge der schwingungsfähig gehaltenen Saite 65a und im Verhältnis zu den Werten der zu übertragenden Kräfte verhältnismässig klein. Die Vorrichtung 21 hat nämlich eine nur ungefähr das Zweifache der Saiten-Länge betragende Länge und eine Breite, die nur ungefähr 50% grösser als die Saitenlänge ist. Ferner ist die rechtwinklig zu den Plättchen-Ebenen gemessene Maximal-Abmessung der Vorrichtung kleiner als die halbe Länge der Saite. Die Dicke der Plättchen 23 beträgt vorzugsweise höchstens 8 % und beispielsweise 5 % bis 6 % der Länge des schwingfähigen Teils des Wandelelements 65, d.h. der Saite 65a. Bei hergestellten Ausführungsbeispielen der Kraftübertragungs-Vorrichtung beträgt der Abstand der Achsen der beiden Stifte 61 beispielsweise ungefähr 18 mm und die Länge der schwingfähig von der Vorrichtung 21 gehaltenen Saite 65a ungefähr 15 mm. Die Plättchen können dann etwa eine mindestens 0,5 mm, höchstens 1 mm und zum Beispiel 0,8 mm betragende Dicke haben. Der Abstand der einander zugewandten Flächen der beiden Plättchen 23 beträgt dann beispielsweise etwa 2 mm bis 2,5 mm. Dadurch dass zwei im Abstand von einander stehende, stellenweise fest miteinander verbundene Plättchen vorhanden sind, hat die Kraft-Übertragungsvorrichtung 21 trotz der relativ dünnen Bemessung der Plättchen eine relativ grosse Steifigkeit gegen Biegungen und/oder Torsionen, bei denen Abschnitte der Plättchen 23 aus den von diesen im Ruhezustand aufgespannten Ebenen herausgebogen werden. Die rechtwinklig zu den Plättchen-Ebenen gemessene Maximal-Abmessung der KraftÜbertragungsvorrichtung 21 ist gleich der Länge der ein wenig über die einander abgewandten Seiten der beiden Plättchen herausragenden Stifte 61 und beträgt zum Beispiel etwa 5 mm bis 6 mm.

Wie sich aus der vorangehenden Beschreibung ergibt, dient die Kraft-Übertragungsvorrichtung 21 nicht nur zur Kraftübertragung auf das Wandelelement 65, sondern auch zum Halten von diesem und der Permanentmagnete 67. Trotzdem kann die Vorrichtung 21 aus einer geringen Anzahl von separaten Bauteilen zusammengebaut werden. Abgesehen von den Schrauben 35, vom Wandelelement 65 und von den Permanentmagneten 67 werden zur Herstellung einer Kraft-Übertragungsvorrichtung nur je zwei Plättchen 23, Distanzhülsen 25, Stifte 61, Schwingungsdämpfer 81 und Schwingungsdämpfer 83 benötigt. Die Bauteile 23, 25, 61, 81, 83 der Vorrichtung 21 sind dabei paarweise identisch, so dass also für deren Herstellung nur fünf verschiedene Arten von Bauteilen benötigt werden. Die zu einer Vorrichtung 21 gehörenden Bauteile können daher bei einer serienmässigen Fabrikation kostengünstig hergestellt und zusammengebaut werden.

Das Plättchen 123, von dem in der Figur 8 die innere, dem nicht gezeichneten Wandelelement sowie dem anderen, nicht gezeichneten Plättchen zugewandte Seite ersichtlich ist, weist anstelle der kreisförmigen Löcher 23d der Plättchen 23 schlitzförmige Löcher 123d auf, deren Längsausdehnung parallel zur nicht gezeichneten Saite verläuft. Jedes schlitzförmige Loch 123d ist an beiden Enden mit einer Erweiterung 123x versehen. Die beim Plättchen 123 vorhandenen schlitzförmigen Öffnungen 123e unterscheiden sich von den Öffnungen 23e der Plättchen 23 dadurch, dass sie bei ihren Enden keine Erweiterungen haben. Im übrigen hat das Plättchen 123 auf seiner dem nicht gezeichneten, anderen Plättchen abgewandten Seite vier Ausnehmungen 123g, die sich von den Enden der schlitzförmigen Öffnungen 123e rechtwinklig zur nicht gezeichneten Saite bis zu den einander abgewandten Rändern der Abschnitte 123b erstrecken. Das Plättchen 123 weist ferner zwei Ausnehmungen 123i auf, die je zwei Grenz- und/oder Anlage- oder Anschlagflächen 123m, 123n bilden. Ferner sind zwei Anschlag- oder Distanznocken 123p und zwei Löcher 123q vorhanden. Abgesehen von den angegebenen Unterschieden ist das Plättchen 123 mehr oder weniger ähnlich wie die Plättchen 23 ausgebildet und kann in analoger Weise zur Bildung einer Kraft-Übertragungsvorrichtung dienen.

Die zum Teil in der Figur 9 dargestellte Kraft-Übertragungsvorrichtung 221 weist zwei Plättchen 223 mit zwei Paaren von miteinander fluchtenden Löchern 223a auf, wobei von diesen Loch-Paaren jedoch nur das eine gezeichnet ist. Bei jedem dieser Loch-Paare ist eine hohlzylindrische, sich zwischen den beiden Plättchen 223 befindende Distanzhülse 225 vorhanden. Bei jedem Paar miteinander fluchtender Löcher 223a ist ein diese und die Distanzhülse 225 durchdringender, die beiden Plättchen 223 fest miteinander verbindender Hohlniet 227 mit einem Kopf 227a verbunden. Im übrigen sind in der Figur 9 noch ein Stift 261, ein Wandelelement 265 und Permanentmagnete 267 eingezeichnet.

Die stark schematisiert durch ein zur Figur 7 analoges Diagramm in der Figur 10 dargestellte Kraft-Übertragungsvorrichtung 321 ist spiegelsymmetrisch bezüglich den Symmetrieebenen 31 sowie 33 entsprechenden Symmetrieebenen 331 bzw. 333 und weist zwei miteinander verbundene Plättchen auf. Diese bilden zusammen ein Referenzorgan 341, einen Kraftaufnehmer 343, zwei längliche Übertragungsglieder 347, zwei längliche Übertragungsglieder 349, zwei Biegegelenke 351 und zwei Biegegelenke 353. Die Vorrichtung 321 weist auch Halterungen mit zwei Stiften auf, welche Angriffsstellen 361a bilden, bei denen die Vorrichtung 321 an einem nicht gezeichneten Wandelelement angreift. In der Figur 10 sind ferner noch die durch die Angriffsstellen verlaufende, mit der Symmetrieebene 331 zusammenfallende Angriffsstellen-Verbindungs-Gerade 371 und die Gelenk-Verbindungs-Geraden 373 bezeichnet, wobei die letzteren mit den die Übertragungsglieder darstellenden Strichen zusammenfallen. Des weitern sind in der Figur 10 auch noch zwei Ebenen 375 eingezeichnet, die den Ebenen 75 der Figur 7 entsprechen und mit der Angriffstellen-Verbindungs-Geraden 371 einen rechten Winkel bilden.

Die Vorrichtung 321 kann ähnlich wie die vorher beschriebenen Kraftübertragungs-Vorrichtungen zwei miteinander verbundene Plättchen aufweisen. Die mit Bezugsnummern bezeichneten Teile der Vorrichtung 321 entsprechen jeweils den um 300 kleinere Bezugsnummern aufweisenden Teilen der Vorrichtung 21. Die Vorrichtung 321 unterscheidet sich jedoch von der Vorrichtung 21 insbesondere durch eine andere Anordnung der Übertragungsglieder und der diesen zugeordneten Gelenk-Verbindungs-Geraden. Die den beiden Übertragungsgliedern 347 zugeordneten Gelenk-Verbindungs-Geraden 373 sind nämlich in der Richtung von den Gelenken 351 zu den Gelenken 353 hin von einander weg geneigt. Entsprechendes gilt für die den beiden Übertragungsgliedern 349 zugeordneten Gelenk-Verbindungs-Geraden 373. Die beiden Angriffsstellen 361a befinden sich dementsprechend zwischen den beiden Ebenen 375.

Wenn beim Kraftaufnehmer 343 eine gegen das Referenzorgan 341 gerichtete Kraft Fᵢ in die Vorrichtung 321 eingeleitet wird, werden die beiden Angriffsstellen mit Kräften Fₒ zueinander hin gedrückt. Der Wert des Verhältnisses Fₒ/Fᵢ ist dabei wiederum durch den Wert des Winkels alpha zwischen der Geraden 371 und jeweils einer der Geraden 373 bestimmt. Der Winkel alpha wurde übrigens in der Figur 10 derart zwischen Abschnitte der besagten Geraden eingezeichnet, dass er gleich wie in der Figur 7 einen mehr als 0° und weniger als 90° liegenden Wert hat.

Wenn die Vorrichtung 321 ein Wandelelement mit einer Saite hält und die Kraft Fᵢ in der gezeichneten Richtung auf den Kraftaufnehmer 343 wirkt, ist die an der Saite angreifende Kraft gleich der Differenz zwischen der konstanten, die Saite streckenden Vorspann- oder Ruhekraft F_{c} und der variablen, zur Kraft Fᵢ proportionalen Kraft Fₒ. Man muss also in diesem Fall die Vorspann- oder Ruhekraft grösser als den beim Messen im vorgesehenen Messbereich auftretenden Maximalwert der Kraft Fₒ machen, so dass die Differenz F_{c} - Fₒ immer einen positiven Wert hat, d.h. immer eine die Saite streckende Zugkraft ist.

Man könnte jedoch auch eine Kraft in den Kraftaufnehmer 343 einleiten, die vom Referenzorgan 341 weggerichtet ist. Eine solche Kraft würde dann bei den Angriffsstellen 361a von der Symmetrieebene 333 weggerichtete Zugkräfte auf die Saite ausüben. Wie in der Einleitung erwähnt, könnte man übrigens eventuell auch ein Wandelelement vorsehen, das einen piezoelektrischen Körper aufweist. Dieser würde dann bei den Angriffsstellen vorteilhafterweise mit Druckkräften beaufschlagt, und soll dementsprechend eine zur Aufnahme von Druckkräften geeignete Form aufweisen. Bei der Verwendung eines Wandelelements mit einem piezoelektrischen Körper wäre es also günstig, auf diesen gemäss der Figur 10 bei den Angriffsstellen zu einander hin gerichtete Kräfte auszuüben. Es sei in diesem Zusammenhang noch vermerkt, dass die Richtungen der Kräfte Fᵢ sowie Fₒ selbstverständlich auch bei der Kraft-Übertragungsvorrichtung 21 umgekehrt werden könnten.

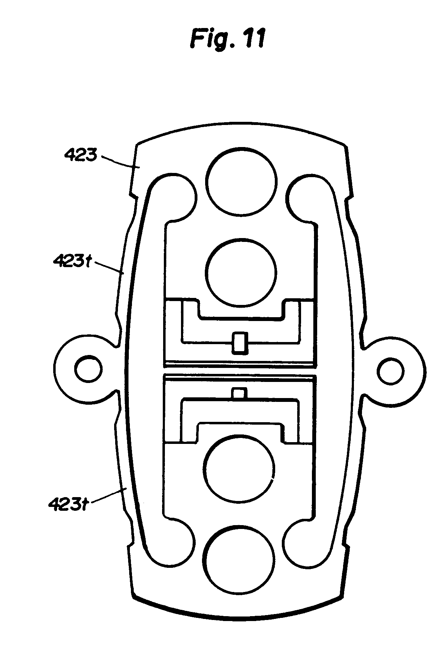

Das in der Figur 11 ersichtliche Plättchen 423 ist weitgehend gleich ausgebildet wie die Plättchen 23, unterscheidet sich aber von diesen dadurch, dass die Stege 423t in der gezeichneten Draufsicht nicht gerade, sondern ein wenig konvex gebogen sind. Zwei Plättchen 423 können in analoger Weise miteinander und mit einem Wandelelement verbunden werden wie die zwei Plättchen 23, wobei jedes Paar sich überdeckender Stege 423t ein Übertragungsglied bildet.

Wie bereits angegeben, sind die erfindungsgemässen Kraft-Messwandler insbesondere für die Verwendung bei Dosiereinrichtungen vorgesehen, die zum Beispiel eine Bandwaage aufweisen oder gravimetrisch arbeiten. Die zu wägende Last kann vom Lastträger bzw. Gutspeicher einer solchen Dosiereinrichtung entweder nur auf einen einzigen Kraft-Messwandler übertragen oder auf mehrere, beispielsweise drei solche verteilt werden. Ferner ist es bei Dosiereinrichtungen vorteilhaft, eine mit der Elektronik-Vorrichtung des Messwandlers oder einer Gruppe von Messwandlern verbundene, zusätzliche äussere Elektronik-Vorrichtung oder eventuell die Elektronik-Vorrichtung des Messwandlers bzw. der Messwandler-Gruppe selbst mit einer Einstellvorrichtung zum Einstellen eines Sollwertes und mit Mitteln auszurüsten, um Abweichungen von diesem Sollwert zu erfassen sowie anzuzeigen und um die geförderte Gutmenge auf den eingestellten Sollwert zu regeln.

Die erfindungsgemässen Messwandler können jedoch auch für Waagen verwendet werden, mit denen Massen unabhängig von der Grösse der am Messort vorhandenen Schwerkraft gemessen werden können. Eine für diesen Zweck bestimmte Waage kann mit zwei je eine Saite aufweisenden Messwandlern ausgerüstet werden. Der Kraftaufnehmer des einen Messwandlers wird dann mit dem Lastträger verbunden, während der Kraftaufnehmer des anderen Messwandlers analog wie die eine Saite von bekannten, zwei Saiten besitzenden Waagen mit einer Referenzmasse verbunden wird.

Selbstverständlich kann man auch Merkmale von verschiedenen der anhand der Zeichnungsfiguren beschriebenen Ausführungsbeispielen der Kraft-Übertragungsvorrichtung miteinander kombinieren. Ferner könnte man den Messwandler statt mit vier Permanentmagneten nur mit zwei solchen ausrüsten und die Saite mit ihrer ersten Eigenschwingungsfrequenz schwingen lassen.

Zudem wäre es möglich, nur eine der beiden Angriffsstellen derart über je ein Übertragungsglied und zwei bei dessen Enden vorhandene Gelenke mit dem Referenzorgan bzw. Kraftaufnehmer zu verbinden, dass die betreffende Angriffsstelle durch eine Verschiebung des Kraftaufnehmers verschiebbar ist.

Wenn man beispielsweise die in der Figur 3 ersichtliche Kraft-Übertragungsvorrichtung derart ändern will, dass nur die sich rechts befindende Angriffsstelle entlang der Angriffsstellen-Verbindungs-Geraden - d.h. entlang der Saite - verschiebbar ist, könnte man hierzu die beiden Gelenke 51, welche die beiden sich links befindenden Übertragungsglieder 47, 49 mit der sich links befindenden Angriffsstelle 61a verbinden, und eventuell auch noch das Gelenk 53 zwischen dem Referenzorgan 41 und dem sich im linken, unteren Figurenquadrat befindenden Übertragungsglied 47 durch starre Verbindungen ersetzen.

## Patentansprüche

1. Kraft-Messwandler, mit einer Kraft-Übertragungsvorrichtung (21, 221, 321) und einem zur Kraftumwandlung in ein elektrisches Signal dienenden Wandelelement (65, 265), wobei die Kraft-Übertragungsvorrichtung (21, 221, 321) ein Referenzorgan (41, 341), einen bezüglich diesen bewegbaren Kraftaufnehmer (43, 343), zwei in Abstand von einander am Wandelelement (65, 265) angreifende Halterungen (55) und Übertragungsglieder (47, 49, 347, 349) aufweist, wobei die letzteren zusammen mit bei ihren Enden angerodneten Gelenken (51, 53, 351, 353) mindestens eine der Halterungen (55) derart bewegbar mit dem Referenzorgan (41, 341) und dem Kraftaufnehmer (43, 343) verbinden, dass eine Abstandsänderung der weiter von einer Halterung (55) entfernten Enden der beiden mit dieser verbundenen Übertragungsglieder (47, 49, 347, 349) eine Abstandsänderung der beiden Halterungen (55) bewirkt, dadurch gekennzeichnet, dass die Kraft-Übertragungsvorrichtung (21, 221, 321) zwei einstückige, zu einander parallele, von einander in Abstand stehende, stellenweise miteinander verbundene Plättchen (23, 123, 223, 423) aufweist, von denen jedes einen zum Referenzorgan (41, 341), einen zum Kraftaufnehmer (43, 343), einen zu jeder Halterung (55), einen zu jedem Übertragungsglied (47, 49, 347, 349) und einen zu jedem Gelenk (51, 53, 351, 353) gehörenden Abschnitt (23b, 23r, 23t, 23u, 23v) aufweist.

2. Kraft-Messwandler nach Anspruch 1, dadurch gekennzeichnet, dass jede Halterung (55) einen Stift (61, 261) aufweist, der in einem Loch (23s) von jedem der beiden Plättchen (23, 123, 223) gehalten ist, und dass das Wandelelement (65, 265) einen länglichen, im Zwischenraum zwischen den beiden Plättchen (23, 123, 223) angeordneten Hauptabschnitt (65a) und bei dessen beiden Enden mit diesem zusammen aus einem einstückigen Körper bestehende, an je einem der Stifte (61, 261) befestigte Ösen (65b) hat.

3. Kraft-Messwandler nach Anspruch 2, dadurch gekennzeichnet, dass die Stifte (61, 261) sowohl in die Löcher (23s) der Plättchen (23, 123, 223, 423) als auch in die Löcher (65d) der Ösen (65b) des Wandelelements (65, 265) eingepresst sind.

4. Kraft-Messwandler nach Anspruch 2 oder 3, dadurch gekennzeichnet, dass die Plättchen (23, 123, 223, 423) und das Wandelelement (65, 265) aus metallischen, elektrisch leitenden Materialien bestehen und dass die Stifte (61, 261) elektrisch isolierend sind, zum Beispiel aus einem Korund - etwa einem Saphir oder Rubin - bestehen, und das Wandelelement (65, 265) elektrisch gegen die Plättchen (23, 123, 223, 423) isolieren.

5. Kraft-Messwandler nach einem der Ansprüche 2 bis 4, dadurch gekennzeichnet, dass der längliche Hauptabschnitt des Wandelelements (65, 265) eine beim Messen zum Schwingen bestimmte Saite (65a) bildet, dass zwischen den beiden Plättchen (23, 123, 223, 423) im Bereich des Referenzorgans (41, 341) sowie im Bereich des Kraftaufnehmers (43, 343) je mindestens ein Permanentmagnet (67, 267) angeordnet ist, und dass die Plättchen (23, 123, 223, 423) bei ihren einander zugewandten Seiten mindestens auf den der Saite (65a, 265a) zugewandten Seiten der Permanentmagnete (67, 267) an diesen angreifende Grenz- und/oder Anlageflächen (23n, 123n) bilden, wobei die letzteren zum Beispiel durch Ränder von die Permanentmagnete (67, 267) teilweise aufnehmenden Ausnehmungen (23i, 123i) der Plättchen (23, 123, 223) gebildet sind, wobei vorzugsweise sowohl im Bereich des Referenzorgans (41, 341) als auch im Bereich des Kraftaufnehmers (43, 343) zwei entgegengesetzt polarisierte Permanentmagnete (67, 267) angeordnet und durch von den Plättchen (23, 123, 223, 423) gebildete Distanzmittel (23p) von einander in Abstand gehalten sind.

6. Kraft-Messwandler nach Anspruch 5, dadurch gekennzeichnet, dass im Bereich des Referenzorgans (41, 341) und im Bereich des Kraftaufnehmers (43, 343) ein gummielastischer Schwingungsdämpfer (81) zwischen den beiden Plättchen (23, 123, 223, 423) angeordnet und an mindestens einem von diesen befestigt ist und dass auf jedem Stift (61, 261) zwischen dem Wandelement (65, 265) und mindestens einem der Plättchen (23, 123, 223, 423) ein gummielastischer, ringförmiger Schwingungsdämpfer (83) sitzt.

7. Kraft-Messwandler nach einem der Ansprüche 1 bis 6, wobei jede Gerade (73, 373), die zwei mit dem gleichen Übertragungsglied (47, 49, 347, 349) verbundene, als Biegegelenke ausgebildete Gelenke (51, 53, 351, 353) verbindet, mit einer durch die beiden Halterungen (55) verlaufenden Geraden (71, 371) einen von 90° verschiedenen Winkel (alpha) bildet, so dass die Halterungen (55) beim Messen einer vom Kraftaufnehmer (43, 343) aufgenommenen Kraft (Fᵢ) eine mit dieser einen Winkel bildenden und mit dieser verknüpften Kraft (Fₒ) auf das Wandelelement (65, 265) ausüben, dadurch gekennzeichnet, dass jeder zu einem Biegegelenk (51, 53, 351, 353) gehörende Abschnitt der Plättchen (23, 123, 223, 423) durch eine Einchnürung (23u, 23v) am Ende der zu einem Übertragungsglied (47, 49, 347, 349) gehörenden, länglichen Abschnitte (23t) der Plättchen (23, 123, 223, 423) gebildet ist und dass die beiden Plättchen (23, 123, 223, 423) bezüglich einer zwischen ihnen hindurch verlaufenden Symmetrieebene (29) spiegelsymmetrisch zu einander sind.

8. Kraft-Messwandler nach einem der Ansprüche 1 bis 7, dadurch gekennzeichnet, dass die beiden Plättchen (23, 123, 223, 423) im Bereich des Referenzorgans (41, 341) und im Bereich des Kraftaufnehmers (43, 343) je ein Paar miteinander fluchtender Löcher (23a, 223a) aufweisen, dass bei jedem dieser Loch-Paare eine die Plättchen (23, 123, 223, 423) in Abstand haltende Distanzhülse (25, 225) vorhanden ist, dass das Referenzorgan (41, 341) mit einem das in seinem Bereich vorhandene Loch-Paar und die zu ihm gehörende Distanzhülse (25, 225) durchdringenden Befestigungselement (35) an einem beim Messen feststehenden Bauteil (5) befestigt ist und dass der Kraftaufnehmer (43, 343) mit einem das in seinem Bereich vorhandene Loch-Paar und die zu ihm gehörende Distanzhülse (25, 225) durchringenden Befestigungselement (35) an einem beim Messen bewegbaren, zum Einleiten einer zu messenden Kraft dienenden Krafteinleitorgan (9) befestigt ist, wobei die Distanzhülsen (25) zum Beispiel in die Löcher (23a) der Plättchen (23) hineinragende Hälse und an den einander zugewandten Flächen der Plättchen anliegende Schuterflächen haben und wobei die Befestigungselemente zum Beispiel aus Schrauben (35) bestehen.

9. Kraft-Messwandler nach Anspruch 8, wobei beide Halterungen (55) über längliche Übertragungsglieder (47, 49, 347, 349) und bei deren beiden Enden angeordnete Biegegelenke (51, 53, 351, 353) bewegbar mit dem Referenzorgan (41, 341) und dem Kraftaunehmer (43, 343) verbunden sind, dadurch gekennzeichnet, dass sich die gennanten Löcher (23a) in den zum Referenzorgan (41, 341) und Kraftaufnehmer (43, 343) gehörenden Abschnitten (23b) der Plättchen (23, 123, 423) näher bei einer durch die beiden Halterungen (55) verlaufenden Geraden (71, 371) befinden als die das Referenzorgan (41, 341) und den Kraftaufnehmer (43, 343) mit den Übertragungsgliedern (47, 49, 347, 349) verbindenden Biegegelenke (53, 353), wobei die zum Referenzorgan (41, 341) und zum Kraftaufnehmer (43, 343) gehörenden Abschnitte (23b) der Plättchen (23, 123, 223, 423) vorzugsweise auf der dem Wandelelement (65, 265) abgewandten Seite ihrer genannten Löcher (23a) noch je ein anderes Loch (23d) haben, das zusammen mit den Rändern der gennanten Plättchen-Abschnitte (23b) zwischen deren das ertsgennante Loch (23a) enthaltendem Teil und deren mit den Biegegelenken (53, 353) zusammenhängenden Teilen Stege (23g) begrenzt.

10. Herstellungverfahren für einen Kraft-Messwandler nach einem der Ansprüche 1 bis 9, dadurch gekennzeichnet, dass jedes Plättchen (23, 123, 223, 423) durch Ätzen oder Stanzen aus einem vollen Blechteil hergestellt wird und dass die beiden Plättchen (23, 123, 223, 423) danach in Abstand von einander miteinander und mit dem zwischen ihnen angeordneten Wandelelement (65, 265) verbunden werden.

## Claims

1. Force transducer comprising a force transmitting device (21, 221, 321) and a transducing element (65, 265) serving for transducing a force into an electrical signal, wherein the force transmitting device (21, 221, 321) comprises a reference member (41, 341), a force input member (43, 343) movable with respect thereto, two mutually spaced apart holders (55) engaging at the transducing element (65, 265) and transmitting links (47, 49, 347, 349), wherein the last-mentioned together with joints (51, 53, 351, 353) arranged at their ends movably connect at least one of the holders (55) with the reference member (41, 341) and the force input member (43, 343) in such a manner that a change in spacing of the ends, which are further remote from a holder (55), of the two transmitting links (47, 49, 347, 349) connected therewith causes a change in the spacing of the two holders (55), characterised thereby that the force transmitting device (21, 221, 321) comprises two mutually parallel, unitary plate members (23, 123, 223, 423) disposed at a spacing from one another and connected together at discrete locations, each plate member having a respective section (23b, 23r, 23t, 23u, 23v) associated with the reference member (41, 341), the force input member (43, 343), each holder (55), each transmitting link (47, 49, 347, 349) and each joint (51, 53, 351, 353).

2. Force transducer according to claim 1, characterised thereby that each holder (55) comprises a pin (61, 261), which is mounted in a hole (23s) of each of the two plate members (23, 123, 223), and that the transducing element (65, 265 has an elongate main section (65a) arranged in the intermediate space between the two plate members (23, 123, 223) and eyelets (65b) at both ends of the main section and consisting together with these of a unitary body, each of the eyelets being fastened to a respective one of the pins (61, 261).

3. Force transducer according to claim 2, characterised thereby that the pins (61, 261) are pressed into the holes (23s) of the plate members (23, 123, 223, 423) and also into the holes (65d) of the eyelets (65b) of the transducing element (65, 265).

4. Force transducer according to claim 2 or 3, characterised thereby that the plate members (23, 123, 223, 423) and the transducing element (65, 265) consist of metallic, electrically conductive materials and that the pins (61, 261) are electrically insulating, for example consist of corundum, such as sapphire or ruby, and electrically insulate the transducing element (65, 265) relative to the plate members (23, 123, 223, 423).

5. Force transducer according to one of claims 2 to 4, characterised thereby that the elongate main section of the transducing element (65, 265) forms a string (65a) intended to vibrate during measuring, that at least one respective permanent magnet (67, 267) is arranged between the two plate members (23, 123, 223, 423) in the region of the reference number (41, 341) as well as in the region of the force input member (43, 343), and that the plate members (23, 123, 223, 423) form at their mutually facing sides boundary and/or contact surfaces (23n, 123n) which, at least on those sides of the permanent magnets (67, 267) facing the string (65a, 265a), engage these, wherein the boundary and/or contact surfaces are formed by, for example, edges of recesses (23i, 123i), partly receiving the permanent magnets (67, 267), of the plate members (23, 123, 223) and wherein preferably two oppositely polarised permanent magnets (67, 267) are arranged not only in the region of the reference number (41, 341) but also in the region of the force input member (43, 343) and are held at a spacing from one another by spacing means (23p) formed by the plate members (23, 123, 223, 423).

6. Force transducer according to claim 5, characterised thereby that a rubber elastic vibration damper (81) is arranged between the two plate members (23, 123, 223, 423) in the region of the reference member (41, 341) and in the region of the force input member (43, 343) and is fastened to at least one of these plate members and that a rubber elastic ring-shaped vibration damper (83) is seated on each pin (61, 261) between the transducing element (65, 265) and at least one of the plate members (23, 123, 223, 423).

7. Force transducer according to one of claims 1 to 6, wherein each straight line (73, 373), which connects two joints (51, 53, 351, 353) connected with the same transmitting link (47, 49, 347, 349) and constructed as a bending joint, forms an angle (alpha) differing from 90° with a straight line (71, 371) passing through the two holders (55), so that the holders (55), on measuring an input force (Fᵢ) received by the force input member (43, 343) exert on the transducing element (65, 265) a force (Fₒ) forming an angle with the input force and and linked therewith, characterised thereby that each section, which is associated with a bending joint (51, 53, 351, 353), of the plate members (23, 123, 223, 423) is formed by a constriction (23a, 23b) at the ends of the elongate section (23t), which is associated with a transmitting link (47, 49, 347, 349), of the plate members (23, 123, 223, 423) and that the two plate members (23, 123, 223, 423) are mirror symmetrical relative to one another with respect to a plane (29) of symmetry passing through therebetween.

8. Force transducer according to one of claims 1 to 7, characterised thereby that the two plate members (23, 123, 223, 423) have a respective pair of mutually aligned holes (23a, 223a) in the region of the reference member (41, 341) and in the region of the force input member (43, 343), that a spacer bushing (25, 225) is present at each of these pairs of holes and holds the plate members (23, 123, 223, 423) at a spacing, that the reference member (41, 341) is fastened to a component (5), which is stationary during measuring, by a fastening element (35) passing through the pair of holes present in the region of the reference member and the spacer bushing (25, 225) associated therewith, and that the force input member (43, 343) is fastened to an input force applying member (9), which is movable during measuring and serves for the introduction of a force to be measured, by a fastening element (35) passing through the pair of holes present in the region of the force input member and the spacer bushing (25, 225) associated therewith, wherein the spacer bushings (25) have, for example, collars projecting into the holes (23a) of the plate members (23) and shoulder surfaces abutting against the mutually facing surfaces of the plate members, and wherein the fastening elements consist of, for example screws (35).

9. Force transducer according to claim 8, wherein both holders (55) are movably connected with the reference member (41, 341) and the force input member (43, 343) by elongate transmitting links (47, 49, 347, 349) and bending joints (51, 53, 351, 353) arranged at both ends thereof, characterised thereby that the said holes (23a) in the sections (23b), which are associated with the reference member (41, 341) and force input member (43, 343), of the plate members (23, 123, 223, 423) are disposed closer to a straight line (71, 371) passing through the two holders (55) than to the joints (53, 353) connecting the reference member (41, 341) and the force input member (43, 343) with said transmitting links (47, 49, 347, 349), wherein the sections (23b), which are associated with the reference member (41, 341) and force input member (43, 343), of the plate members (23, 123, 223, 423) preferably have, on the side of their said holes (23a) remote from the transducing element (65, 265), a respective further hole (23d) which, together with the edges of the said plate member sections (23b),bounds webs 23g between the part thereof containing the first-mentioned hole (23a) and the parts thereof connected with the bending joints (53, 353).

10. Manufacturing method for a force transducer according to one of claims 1 to 9, characterised thereby that each plate member (23, 123, 223, 423) is produced from a full sheet-metal part by etching or stamping and that thereafter the two plate members (23, 123, 223, 423) are connected together at a spacing from each other and to the transducing element (65, 265) arranged therebetween.

## Revendications

1. Transformateur de mesure de force comportant un dispositif de transmission de force (21, 221, 321) et un élément transformateur (65, 265) servant à transformer une force en signal électrique, étant précisé que le dispositif de transmission de force (21, 221, 321) possède un organe de référence (41, 341), un capteur de force (43, 343) mobile par rapport à celui-ci, deux attaches (55) agissant, suivant un certain écartement l'une par rapport à l'autre, sur l'élément transformateur (65, 265), et des organes de transmission (47, 49, 347, 349), ces derniers reliant de façon mobile, conjointement avec des joints articulés (51, 53, 351, 353) disposés à leurs extrémités, l'une au moins des attaches (55) à l'organe de référence (41, 341) et au capteur de force (43, 343) de telle sorte qu'une variation de l'écartement entre les extrémités des deux organes de transmission (47, 49, 347, 349) reliés à une attache (55) qui sont les plus éloignées de celle-ci entraîne une variation de l'écartement entre les deux attaches (55), caractérisé en ce que le dispositif de transmission de force (21, 221, 321) possède deux plaquettes (23, 123, 223, 423) réalisées d'une seule pièce, parallèles, espacées l'une de l'autre et reliées par endroits entre elles, qui comportent chacune une section (23b, 23r, 23t, 23u, 23v) faisant partie de l'organe de référence (41, 341), du capteur de force (43, 343), de chaque attache (55), de chaque organe de transmission (47, 49, 347, 349) et de chaque joint articulé (51, 53, 351, 353).

2. Transformateur de mesure de force selon la revendication 1, caractérisé en ce que chaque attache (55) possède une tige (61, 261) qui est retenue par chacune des deux plaquettes (23, 123, 223) dans un trou (23s), et en ce que l'élément transformateur (65, 265) comporte une section principale oblongue (65a) disposée dans l'espace intermédiaire défini entre les deux plaquettes (23, 123, 223), et, aux deux extrémités de cette section (65a), des anneaux (65b) composés d'un corps réalisé d'une seule pièce avec elle et fixés aux tiges respectives (61, 261).

3. Transformateur de mesure de force selon la revendication 2, caractérisé en ce que les tiges (61, 261) sont engagées par force non seulement dans les trous (23s) des plaquettes (23, 123, 223, 423), mais aussi dans les trous (65d) des anneaux (65b) de l'élément transformateur (65, 265).

4. Transformateur de mesure de force selon la revendication 2 ou 3, caractérisé en ce que les plaquettes (23, 123, 223, 423) et l'élément transformateur (65, 265) se composent de matériaux métalliques électriquement conducteurs, et en ce que les tiges (61, 261) sont électriquement isolés et se composent par exemple d'un corindon (saphir ou rubis), et isolent électriquement l'élément transformateur (65, 265) par rapport aux plaquettes (23, 123, 223, 423).

5. Transformateur de mesure de force selon l'une des revendications 2 à 4, caractérisé en ce que la section principale oblongue de l'élément transformateur (65, 265) définit une corde (65a) destinée à vibrer lors de la mesure, en ce qu'il est prévu, entre les deux plaquettes (23, 123, 223, 423), dans la zone de l'organe de référence (41, 341) et dans celle du capteur de force (43, 343), au moins un aimant permanent (67, 267), et en ce que les plaquettes (23, 123, 223, 423) définissent, sur leurs faces tournées l'une vers l'autre, au moins sur les faces des aimants permanents (67, 267) tournées vers la corde (65a, 265a), des surfaces de séparation et/ou d'application (23n, 123n) agissant sur lesdits aimants, ces dernières étant définies par exemple par des bords de cavités (23i, 123i) des plaquettes (23, 123, 223) recevant en partie les aimants permanents (67, 267), étant précisé qu'il est prévu de préférence, non seulement dans la zone de l'organe de référence (41, 341), mais aussi dans celle du capteur de force (43, 343), deux aimants permanents (67, 267) polarisés à l'opposé l'un de l'autre, qui sont maintenus espacés l'un de l'autre par des moyens d'écartement (23p) définis par les plaquettes (23, 123, 223, 423).

6. Transformateur de mesure de force selon la revendication 5, caractérisé en ce qu'il est prévu, dans la zone de l'organe de référence (41, 341) et dans celle du capteur de force (43, 343), un amortisseur de vibrations (81) présentant l'élasticité du caoutchouc, qui est disposé entre les deux plaquettes (23, 123, 223, 423) et est fixé à l'une au moins de celles-ci, et en ce qu'un amortisseur de vibrations annulaire (83) présentant l'élasticité du caoutchouc est posé sur chaque tige (61, 261), entre l'élément transformateur (65, 265) et l'une au moins des plaquettes (23, 123, 223, 423).

7. Transformateur de mesure de force selon l'une des revendications 1 à 6, dans lequel chaque droite (73, 373) qui relie deux joints articulés (51, 53, 351, 353) conçus comme des joints articulés de flexion et reliés au même organe de transmission (47, 49, 347, 349) définit, avec une droite (71, 371) passant par les deux attaches (55), un angle (alpha) différent de 90°, de sorte que les attaches (55), lors de la mesure d'une force (Fᵢ) reçue par le capteur de force (43, 343), exercent sur l'élément transformateur (65, 265) une force (Fₒ) définissant un angle avec la force (Fᵢ) et liée à celle-ci, caractérisé en ce que chaque section des plaquettes (23, 123, 223, 423) faisant partie d'un joint articulé de flexion (51, 53, 351, 353) est définie par un étranglement (23u, 23v) à l'extrémité des sections oblongues (23t) des plaquettes (23, 123, 223, 423) faisant partie d'un organe de transmission (47, 49, 347, 349), et en ce que les deux plaquettes (23, 123, 223, 423) sont symétriques par rapport à un plan de symétrie (29) passant entre elles.

8. Transformateur de mesure de force selon l'une des revendications 1 à 7, caractérisé en ce que les deux plaquettes (23, 123, 223, 423) possèdent chacune, dans la zone de l'organe de référence (41, 341) et dans celle du capteur de force (43, 343), une paire de trous (23a, 223a) dans l'alignement l'un de l'autre, en ce qu'il est prévu, pour chacune de ces paires de trous, un manchon d'écartement (25, 225) maintenant les plaquettes (23, 123, 223, 423) espacées, en ce que l'organe de référence (41, 341) est fixé, à l'aide d'un élément de fixation (35) traversant la paire de trous prévue dans sa zone et le manchon d'écartement (25, 225) faisant partie dudit organe de référence (41, 341), à un élément de construction (5) immobile lors de la mesure, et en ce que le capteur de force (43, 343) est fixé, à l'aide d'un élément de fixation (35) traversant la paire de trous prévue dans sa zone et le manchon d'écartement (25, 225) faisant partie dudit capteur de force (43, 343), à un organe d'introduction de force (9) mobile, lors de la mesure, et servant à introduire une force à mesurer, étant précisé que les manchons d'écartement (25) comportent par exemple des collets entrant dans les trous (23a) des plaquettes (23), et des surfaces d'épaulement appliquées contre les surfaces des plaquettes tournées l'une vers l'autre, et que les éléments de fixation se composent par exemple de vis (35).

9. Transformateur de mesure de force selon la revendication 8, dans lequel les deux attaches (55) sont reliées de façon mobile à l'organe de référence (41, 341) et au capteur de force (43, 343) par l'intermédiaire d'organes de transmission oblongs (47, 49, 347, 349) et de joints articulés de flexion (51, 53, 351, 353) disposés aux deux extrémités de ceux-ci, caractérisé en ce que lesdits trous (23a) prévus dans les sections (23b) des plaquettes (23, 123, 223, 423) faisant partie de l'organe de référence (41, 341) et du capteur de force (43, 343) se trouvent plus près d'une droite (71, 371) passant par les deux attaches (55) que les joints articulés de flexion (53, 353) reliant l'organe de référence (41, 341) et le capteur de force (43, 343) aux organes de transmission (47, 49, 347, 349), étant précisé que les sections (23b) des plaquettes (23, 123, 223, 423) faisant partie de l'organe de référence (41, 341) et du capteur de force (43, 343) possèdent de préférence, du côté de leurs trous (23a) opposé à l'élément transformateur (65, 265), un autre trou (23d) qui délimite, avec les bords desdites sections de plaquettes (23b), entre la partie de celles-ci contenant le trou cité en premier (23a) et les parties rattachées aux joints articulés de flexion (53, 353), des barrettes (23g).

10. Procédé de fabrication pour un transformateur de mesure de force selon l'une des revendications 1 à 9, caractérisé en ce que chaque plaquette (23, 123, 223, 423) est fabriquée par attaque par corrosion ou par découpage à partir d'une pièce de tôle pleine, et en ce que les deux plaquettes (23, 123, 223, 423) sont ensuite reliées entre elles suivant un certain écartement et reliées à l'élément transformateur (65, 265) disposé entre elles.
